(19) Europäisches Patentamt
European Patent Office
Office européen des brevets

(11) Veröffentlichungsnummer: **0 051 807**
**B1**

(12) # EUROPÄISCHE PATENTSCHRIFT

(45) Veröffentlichungstag der Patentschrift: **13.02.85**

(51) Int. Cl.⁴: **C 09 B 62/513,** C 09 B 62/453, D 06 P 3/66, D 06 P 3/10

(21) Anmeldenummer: **81109103.2**

(22) Anmeldetag: **28.10.81**

(54) **Wasserlösliche Disazoverbindungen, Verfahren zu ihrer Herstellung und ihre Verwendung als Farbstoffe.**

(30) Priorität: **06.11.80 DE 3041891**
**06.10.81 DE 3139657**

(43) Veröffentlichungstag der Anmeldung:
**19.05.82 Patentblatt 82/20**

(45) Bekanntmachung des Hinweises auf die Patenterteilung:
**13.02.85 Patentblatt 85/7**

(84) Benannte Vertragsstaaten:
**BE CH DE FR GB IT LI**

(56) Entgegenhaltungen:
**BE - A - 620 899**
**FR - A - 2 372 210**
**US - A - 3 531 459**

(73) Patentinhaber: **HOECHST AKTIENGESELLSCHAFT, Postfach 80 03 20, D-6230 Frankfurt am Main 80 (DE)**

(72) Erfinder: **Mischke, Peter, Dr., Eichhornweg 2, D-6232 Bad Soden am Taunus (DE)**
Erfinder: **Fuchs, Hermann, Dr., Altenhainer Strasse 2, D-6240 Königstein/Taunus (DE)**
Erfinder: **Meininger, Fritz, Dr., Loreleistrasse 7, D-6230 Frankfurt am Main 80 (DE)**

**EP 0 051 807 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung liegt auf dem technischen Gebiet der wasserlöslichen Disazofarbstoffe, die faserreaktive Eigenschaften besitzen.

Aus US-A-3 531 459 und FR-2 372 210 sind faserreaktive Monoazofarbstoffe bekannt, deren Kupplungskomponente eine N-N-Bis-(β-sulfatoäthyl)-anilin-Verbindung oder eine N-Alkyl-N-β-sulfatoäthyl)-anilin-Verbindung ist; sie liefern in der Regel orangefarbige Färbungen ausreichender Qualität. Aus diesen Druckschriften ergibt sich allerdings kein Hinweis auf Disazofarbstoffe und welche zusätzlichen Strukturmerkmale in die bekannten Monoazoverbindungen eingebaut werden könnten, aus denen sich neue färberisch wertvolle faserreaktive Disazofarbstoffe mit Farbvertiefungen in den Bordeaux- und Braunbereich ergeben.

Die Erfindung betriff nunmehr neue wasserlösliche Disazoverbindungen der allgemeinen Formel (1)

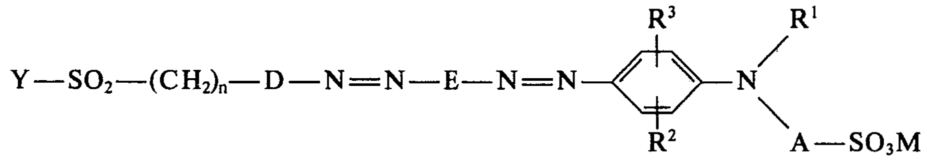 (1)

in welcher bedeuten:

Y ist die Vinylgruppe oder eine Gruppe der Formel $-CH_2-CH_2-Z$, in welcher Z einen organischen oder anorganischen, alkalisch eliminierbaren Rest oder die Hydroxygruppe bedeutet;

n steht für die Zahl Null, 1 oder 2;

D ist der Phenylenrest, der durch einen oder zwei Substituenten aus der Gruppe niederes Alkyl, niederes Alkoxy, Hydroxy, niederes Alkanoylamino, Benzoylamino, Chlor, Brom, Fluor und Carboxy und/oder durch eine Nitrogruppe und/oder durch eine Sulfogruppe substituiert sein kann, oder

D ist ein Naphthylenrest, der durch einen oder zwei Substituenten aus der Gruppe niederes Alkyl, niederes Alkoxy, Hydroxy, niederes Alkanoylamino, Benzoylamino, Chlor, Brom, Fluor, Carboxy und Sulfo und/oder durch eine Nitrogruppe substituiert sein kann, oder

D ist der Benzthiazol-2-yl-Rest, der im carbocyclischen Ring die angegebene Gruppe der Formel $Y-SO_2-(CH_2)_n-$ gebunden enthält und in diesem Benzolkern weiterhin durch einen Substituenten aus der Gruppe niederes Alkyl, niederes Alkoxy, Hydroxy, niederes Alkanoylamino, Benzoylamino, Nitro, Chlor, Brom und Sulfo substituiert sein kann;

E ist der 1,4-Phenylen- oder der 1,4-Napthylenrest, die beide durch einen oder zwei Substituenten aus der Gruppe niederes Alkyl, niederes Alkoxy, Hydroxy, Ureido, niederes Alkanoylamino, Benzoylamino, Benzolsulfonylamino, durch niederes Alkyl, niederes Alkoxy, Chlor und/oder Sulfo substituiertes Benzoylamino, durch niederes Alkyl, niederes Alkoxy, Chlor und/oder Sulfo substituiertes Benzolsulfonylamino, Chlor, Brom, Carboxy und Sulfo substituiert sein können;

A ist der Äthylenrest der Formel $-CH_2-CH_2-$ oder der Äthylenoxyrest der Formel $-CH_2-CH_2-O-$ oder ein Propylenrest der Formel

$-CH_2-CH_2-CH_2-$

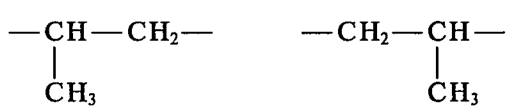

oder

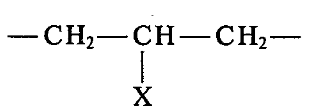

worin X für die Hydroxygruppe oder eine Acyloxygruppe einer niederen Alkancarbonsäure, beispielsweise die Acetoxy- oder Propionyloxy-Gruppe, oder für ein Halogenatom, vorzugsweise Chlor- oder Bromatom, oder für die Sulfatogruppe oder die Phosphatogruppe steht, oder ist ein Rest der Formel

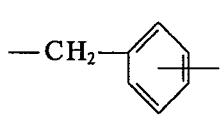 oder 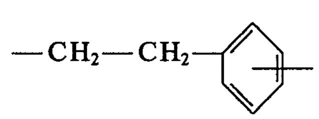

M ist ein Wasserstoffatom oder das Äquivalent eines Metalls, vorzugsweise eines Alkalimetalls oder eines Erdalkalimetalls, wie insbesondere des Natriums, Kaliums oder Calciums;

$R^1$ ist ein Wasserstoffatom, eine niedere Alkylgruppe, eine niedere Alkenylgruppe oder eine niedere, durch Phenyl und/oder Hydroxy substituierte Alkylgruppe, wobei der Phenylrest durch Methyl, Methoxy und/oder Chlor substituiert sein kann, wie insbesondere die Benzyl- oder Phenäthylgruppe und eine Hydroxyalkylgruppe mit 2 bis 4 C-Atomen, oder ist eine mit einer Säure veresterte Hydroxyalkylgruppe mit 2 bis 4 C-Atomen in diesem Alkylrest, wie bspw. Phenylsulfonyloxyalkyl- oder niedere Alkanoyloxy-alkyl-Gruppe, wie eine Acetoxyalkyl- oder Propionyloxyalkyl-Gruppe, oder eine Cyanalkylgruppe mit 2 bis 4 C-Atomen im Alkylrest, eine Carboxyalkylen-, Carbonamidoalkylen- oder Carbalkoxyalkylengruppe mit jeweils 1 bis 4 C-Atomen in dem Alkyl- bzw. Alkylenrest, eine Halogenalkylgruppe mit 2 bis 4, bevorzugt 2 oder 3 C-Atomen, bevorzugt eine Chloralkylgruppe, oder eine niedere Halogenalkenylgruppe, in welcher das Halogen bevorzugt Chlor oder Brom ist, oder ist eine Gruppe der obenstehend definierten Formel $-A-SO_3M$;

$R^2$ ist ein Wasserstoffatom, eine niedere Alkylgruppe, bevorzugt hiervon eine Methylgruppe, oder eine niedere Alkoxygruppe, die durch Hydroxy, Acetoxy, Carboxy, Carbonamid, Cyan oder Halogen, wie Chlor und Brom, substituiert sein kann, oder ein Halogenatom, wie ein Chlor-, Brom- oder Fluoratom, oder eine niedere Alkanoylamino-, wie Acetylamino-, eine Benzoylamino-, Ureido- oder Trifluormethylgruppe;

$R^3$ ist ein Wasserstoffatom, eine niedere Alkylgruppe, bevorzugt hiervon eine Methylgruppe, oder eine niedere Alkoxygruppe, die durch Hydroxy, Acetoxy, Carboxy, Carbonamid, Cyan oder Halogen, wie Chlor oder Brom, substituiert sein kann, oder ist ein Halogenatom, wie Chlor-, Brom- oder Fluoratom.

Die Formelglieder $R^2$ und $R^3$ können zueinander gleiche oder voneinander verschiedene Bedeutungen besitzen.

Die Angaben »niedere« bedeuten hier wie im folgenden, daß der in der Gruppe enthaltene Alkyl- oder Alkylen- oder Alkenylrest aus 1 bis 6 bzw. 2 bis 6 C-Atomen, bevorzugt aus 1 bis 4 bzw. 2 bis 4 C-Atomen, besteht.

Alkalisch eliminierbare Gruppen Z sind beispielsweise Halogenatome, wie das Chlor-, Brom- oder Fluoratom, Estergruppen organischer Carbon- und Sulfonsäuren, wie ein niederer Alkanoyloxyrest, beispielsweise der Acetoxyrest, oder ein Acyloxyrest einer aromatischen Carbon- oder Sulfonsäure, wie der Benzoyloxy-, Sulfobenzoyloxy-, Benzolsulfonyloxy- oder Toluolsulfonyloxyrest, des weiteren die niederen Alkylsulfonylamino- und Arylsulfonylaminogruppen, die Phenoxygruppe, die Dialkylaminogruppen mit Alkylgruppen von jeweils 1 bis 4 C-Atomen, wie die Dimethylamino- oder Diäthylaminogruppe, sowie die Monoestergruppen, beispielsweise der Thioschwefelsäure, der Phosphorsäure und insbesondere der Schwefelsäure.

Die neuen Disazoverbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere als Natrium-, Kalium- und auch Calciumsalze. Sie finden bevorzugt in Form dieser Salze Verwendung als Farbstoffe zum Färben und Bedrucken von hydroxy- und/oder carbonamidgruppenhaltigen Fasern oder von Leder.

Die vorliegende Erfindung betrifft weiterhin ein Verfahren zur Herstellung der obengenannten und definierten Disazoverbindungen der allgemeinen Formel (1). Dieses Verfahren ist dadurch gekennzeichnet, daß man eine Verbindung der allgemeinen Formel (2)

$$Y-SO_2-(CH_2)_n-D-N{=}N-E-NH_2 \qquad (2)$$

in welcher D, E, Y und n die obengenannten Bedeutungen haben, in an und für sich bekannter Weise diazotiert und mit einer Kupplungskomponente der allgemeinen Formel (3)

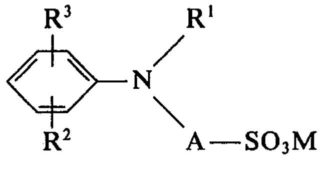

(3)

in der M, A, $R^1$, $R^2$ und $R^3$ die obengenannten Bedeutungen haben, zur Disazoverbindung der allgemeinen Formel (1) kuppelt und gegebenenfalls im Falle daß Y für die $\beta$-Hydroxyäthyl-Gruppe steht, diese Disazoverbindung mit der $\beta$-Hydroxyäthyl-Gruppe mit Hilfe eines Sulfatierungsmittels in die entsprechende Disazoverbindung der allgemeinen Formel (1), in welcher Y für die $\beta$-Sulfatoäthylgruppe steht, oder mit einem Phosphatierungsmittel in die entsprechende Verbindung der allgemeinen Formel (1), in welcher Y für die $\beta$-Phosphatoäthyl-Gruppe steht, überführt.

Geeignete Sulfatierungsmittel sind beispielsweise 90 bis 100%ige Schwefelsäure, Chlorsulfonsäure, Amidosulfonsäure oder andere schwefeltrioxidabgebende Verbindungen. Geeignete Phosphatierungsmittel sind beispielsweise konzentrierte Phosphorsäure, Pyrophosphorsäure, Metaphosphorsäure oder Polyphosphorsäure, weiterhin Polyphosphorsäurealkylester, Phosphoroxychlorid oder Gemische aus Phosphorsäure und Phosphor(V)-oxid.

Die Aminoazoverbindungen der allgemeinen Formel (2) lassen sich in an und für sich bekannter Weise durch Kupplung eines diazotierten Amins der allgemeinen Formel (4)

$$Y-SO_2-(CH_2)_n-D-NH_2 \qquad (4)$$

in welcher D, Y und n die obengenannten Bedeutungen haben, mit einer kupplungsfähigen Verbindung der allgemeinen Formel (5)

$$H-E-NH_2 \qquad (5)$$

in welcher E die obengenannte Bedeutung besitzt, herstellen. Die weitere erfindungsgemäße Umsetzung (Diazotierung und Kupplung) dieser Aminoazoverbindung der allgemeinen Formel (2) zur Disazoverbindung der allgemeinen Formel (1) kann ohne Zwischenisolierung nach deren Herstellung erfolgen; so kann beispielsweise diese weitere Umsetzung in erfindungsgemäßer Weise im selben Reaktionsansatz durchgeführt werden.

Aromatische Amine der allgemeinen Formel (4), die als Diazokomponenten zur Herstellung der erfindungsgemäßen Verbindungen dienen, sind beispielsweise insbesondere folgende:

4-β-Sulfatoäthylsulfonyl-anilin, 4-β-Chloräthylsulfonyl-anilin, 4-β-Phosphatoäthylsulfonyl-anilin, 4-Vinylsulfonyl-anilin, 4-β-Thiosulfatoäthylsulfonyl-anilin, 2-Sulfo-4-β-sulfatoäthylsulfonyl-anilin, 2-Brom-4-β-sulfatoäthylsulfonyl-anilin, 2-Chlor-4-β-sulfatoäthylsulfonyl-anilin, 2-Chlor-5-β-chloräthylsulfonyl-anilin, 3-β-Sulfatoäthylsulfonyl-anilin, 2-Brom-5-β-sulfatoäthylsulfonyl-anilin, 2,6-Dichlor-4-β-sulfatoäthylsulfonyl-anilin, 2,6-Dibrom-4-β-sulfatoäthylsulfonyl-anilin, 2,5-Dichlor-4-β-sulfatoäthylsulfonyl-anilin, 2-Methyl-5-β-sulfatoäthylsulfonyl-anilin, 2-Methoxy-5-β-sulfatoäthylsulfonyl-anilin, 2-Methoxy-4-β-sulfatoäthylsulfonyl-anilin, 2-Methyl-6-chlor-4-β-sulfatoäthylsulfonyl-anilin, 2,6-Dimethyl-4-β-sulfatoäthylsulfonyl-anilin, 2,6-Dimethyl-3-β-sulfatoäthylsulfonyl-anilin, 2,5-Dimethoxy-4-β-sulfatoäthylsulfonyl-anilin, 2-Methoxy-5-methyl-4-β-sulfatoäthylsulfonyl-anilin, 2-Nitro-4-β-sulfatoäthylsulfonyl-anilin, 4-Nitro-2-β-sulfatoäthylsulfonyl-anilin, 6-β-Sulfatoäthylsulfonyl-2-naphthyl-amin, 1-Sulfo-6-β-sulfatoäthylsulfonyl-2-naphthylamin, 8-β-Sulfatoäthylsulfonyl-2-naphthylamin, 6-Sulfo-8-β-sulfatoäthylsulfonyl-2-naphthylamin, 6-Vinylsulfonyl-2-aminobenzthiazol, 6-β-Sulfatoäthylsulfonyl-2-aminobenzthiazol, 4-ω-(β-Sulfatoäthylsulfonyl)-tolylamin, 3-ω-(β-Sulfatoäthylsulfonyl)-tolylamin, 6-Methoxy-3-ω-(β-sulfatoäthylsulfonyl)-tolylamin, 4-Methoxy-3-ω-(β-sulfatoäthylsulfonyl)-tolylamin, 4-ω-(β-Sulfatoäthylsulfonyl)-äthyl-anilin, 3-ω-(β-Sulfatoäthylsulfonyl-äthyl-anilin, 5-(β-Sulfatoäthylsulfonyl-methyl)-1-naphthylamin und deren β-Hydroxyäthylsulfonyl-Abkömmlinge.

Die Verbindungen der Formel (4) sind bekannt und lassen sich in der in der Literatur vielfach beschriebenen Weise herstellen. Beispielsweise erhält man die bevorzugten Verbindungen der Formel (4) mit einer β-Sulfatoäthylsulfonylgruppe aus den entsprechenden β-Hydroxyäthylsulfonyl-Verbindungen durch Veresterung, beispielsweise durch wasserhaltige oder konzentrierte Schwefelsäure oder mittels Amidosulfonsäure, wie beispielsweise durch Eintragen der entsprechenden β-Hydroxyäthylsulfonyl-aniline und -naphthylamine in eine äquimolare Menge 60%iger Schwefelsäure und anschließendes Erhitzen in analoger Weise zu dem in der deutschen Patentschrift 1 150 163 beschriebenen Verfahren oder beispielsweise durch Lösen der β-Hydroxyäthylsulfonyl-aniline oder -naphthylamine in überschüssiger konzentrierter Schwefelsäure oder 100%iger Schwefelsäure (Monohydrat) bei Raumtemperatur oder duch Umsetzung mit Amidosulfonsäure in Anwesenheit von Pyridin oder einer Pyridinbase in analoger Weise zu den in der deutschen Patenschrift 1 443 877 beschriebenen Veresterungsverfahren. Die so hergestellten β-Sulfatoäthylsulfonyl-aniline und -naphthylamine können für den Einsatz im erfindungsgemäßen Verfahren auch in nicht isolierter Form in Form des aus der Veresterung anfallenden Reaktionsgemisches verwendet werden.

Aromatische Amine der allgemeinen Formel (5), die als Kupplungskomponenten zur Herstellung der Aminoazoverbindungen der allgemeinen Formel (2) dienen, sind ebenfalls allgemein bekannt. Von ihnen sind bevorzugt zu nennen: Anilin, o-Toluidin, m-Toluidin, o-Anisidin, m-Anisidin, Anthranilsäure, Kresidin, 2,5-Xylidin, 2,5-Dimethoxy-anilin, 3-Amino-acetanilid, 3-Amino-acetanilid-4-carbonsäure, 3-Amino-acetanilid-4-sulfonsäure, 3-Aminophenylharnstoff, 3-Aminophenylharnstoff-4-sulfonsäure, 1-Naphthylamin-6-sulfonsäure, 1-Naphthylamin-7-sulfonsäure und 2-Äthoxy-1-naphthylamin-6-sulfonsäure.

Bevorzugt ist in der allgemeinen Formel (1) der Formelrest $R^1$ ein Wasserstoffatom oder eine Alkylgruppe von 2, 3 oder 4 C-Atomen, die durch einen Phenylrest, eine Hydroxy-, niedere Alkanoyloxy-, Cyan- oder Carbonamidgruppe oder ein Chloratom substituiert sein kann; weiterhin ist $R^1$ bevorzugt die oben definierte Gruppe der Formel $-A-SO_3M$. Der Formelrest $R^2$ ist bevorzugt ein Wasserstoffatom oder eine Methyl- oder Äthylgruppe, eine Methoxy- oder Äthoxygruppe, die beide durch eine Hydroxy-, Acetoxy-, Carboxy-, Carbonamid- oder eine Cyangruppe oder ein Chloratom substituiert sein können; weiterhin ist $R^2$ bevorzugt ein Chlor- oder Bromatom, insbesondere hiervon ein Chloratom. Ebenso steht $R^3$ bevorzugt für ein Wasserstoffatom oder eine Methyl- oder Äthylgruppe, eine Methyloxy- oder Äthoxygruppe, die beide durch eine Hydroxy-, Acetoxy-, Carboxy-, Carbonamid- oder Cyangruppe oder

ein Chloratom substituiert sein können; weiterhin ist $R^3$ bevorzugt ein Chlor- oder Bromatom, insbesondere hiervon ein Chloratom.

Von den erfindungsgemäßen Verbindungen der allgemeinen Formel (1) sind insbesondere diejenigen bevorzugt, für die der Formelrest D den 1,4-Phenylenrest oder den 1,4-Naphthylenrest bedeutet, die beide durch einen oder zwei Substituenten aus der Gruppe Methyl, Methoxy, Hydroxy, Chlor, Brom, Carboxy und Sulfo substituiert sein können.

Ebenso bevorzugt sind erfindungsgemäße Verbindungen der allgemeinen Formel (1), in welcher E den 1,4-Phenylenrest bedeutet, der durch eine oder zwei niedere Alkylgruppen, wie insbesondere die Methyl- oder Äthylgruppe, durch eine oder zwei niedere Alkoxygruppen, wie insbesondere die Methoxy- und Äthoxygruppe, durch eine Carboxygruppe oder durch eine niedere Alkanoylaminogruppe, wie die Acetylamino- oder Propionylaminogruppe, oder durch eine Ureidogruppe oder durch eine niedere Alkanoylaminogruppe und eine Sulfogruppe oder durch eine Ureidogruppe und eine Sulfogruppe substituiert sein kann, oder in welcher E den 1,4-Naphthylenrest bedeutet, der durch eine Sulfogruppe oder durch eine niedere Alkoxygruppe, wie beispielsweise die Methoxy- und insbesondere Äthoxygruppe, und eine Sulfogruppe substituiert ist.

Die zur Synthese der Verbindungen der allgemeinen Formel (1) als Kupplungskomponenten verwendeten Sulfoalkylaniline der allgemeinen Formel (3) können in bekannter Weise hergestellt werden, so beispielsweise nach den aus den Deutschen Offenlegungsschriften 1 481 831 und 1 493 636 bekannten Verfahrensweisen, weiterhin nach den Methoden, die in R. B. Wagner und H. D. Zock, Synthetic Organic Chemistry, John Wiley u. Sons, Inc., New York, 1953, Seiten 812–819, beschrieben sind, des weiteren durch Umsetzung von $\alpha,\alpha'$-Dichlorhydrin mit Natriumsulfit gemäß DE-PS 258 473 und Kondensation dieses Reaktionsproduktes mit einem aromatischen Amin, wie bspw. nach der Reaktionsgleichung

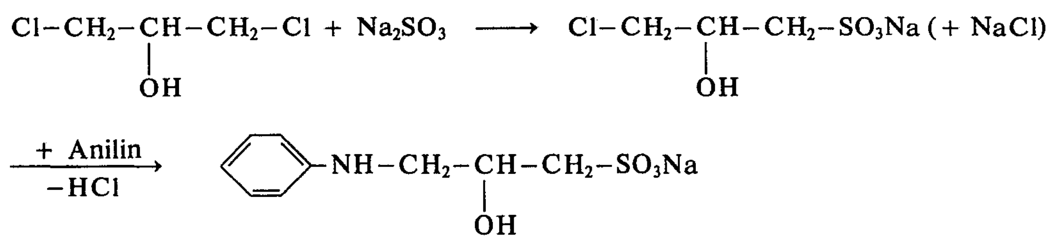


oder durch Umsetzung von Propansulfon mit aromatischen Aminen.

$\beta$-Sulfoäthylanilin-Derivate lassen sich auch durch Umsetzung von $\beta$-Chloräthansulfonsäure bzw. deren Salzen mit aromatischen Aminen herstellen, beispielsweise nach der von J.W. James in Journ. prakt. Chem. [2] 31, 413 (1885) beschriebenen Methode. Sie sind aber auch in sehr guter Reinheit beispielsweise durch Addition von Vinylsulfonylfluorid an Anilinderivate und nachfolgende alkalische Hydrolyse der Sulfofluorid-Gruppe herstellbar.

Die Kupplungskomponenten der Formel (3), die eine $\beta$-Sulfatoäthylaminogruppe enthalten, können beispielsweise nach den von K.H. Saunders, J. Chem. Soc. (London) 121, 2667–2675 (1922), beschriebenen Methoden hergestellt werden. Des weiteren lassen sie sich durch Veresterung ihrer $\beta$-Hydroxyäthyl-anilin-Abkömmlinge herstellen, beispielsweise durch Umsetzung mit Schwefelsäure, so in 100%iger Schwefelsäure in Gegenwart von Chlorsulfonsäure oder in Schwefeltrioxid enthaltender Schwefelsäure (Oleum). Die so veresterten Kupplungskomponenten der Formel (3) können zum Einsatz des erfindungsgemäßen Verfahrens auch in nicht-isolierter Form in Form des aus der Veresterung resultierenden Reaktionsgemisches verwendet werden.

Verbindungen der allgemeinen Formel (3), die als Kupplungskomponenten zur Herstellung der erfindungsgemäßen Verbindungen dienen, sind beispielsweise:

N-$\beta$-Sulfoäthyl-anilin, N-$\beta$-Sulfoäthyl-2-chloranilin, N-$\beta$-Sulfoäthyl-3-chloranilin, N-$\beta$-Sulfoäthyl-2-mehylanilin, N-$\beta$-Sulfoäthyl-2-methoxyanilin, N-$\beta$-Sulfoäthyl-2-methyl-5-chloranilin, N-$\beta$-Sulfoäthyl-2-methoxy-5-chloranilin, N-$\beta$-Sulfoäthyl-2-chlor-5-methoxyanilin, N-$\beta$-Sulfoäthyl-2,5-dichloranilin, N-$\beta$-Sulfoäthyl-N-methyl-anilin, N-$\beta$-Sulfoäthyl-N-äthyl-anilin, N-$\beta$-Sulfoäthyl-N-äthyl-3-methyl-anilin, N-$\beta$-Sulfoäthyl-N-äthyl-3-chloranilin, N-$\beta$-Sulfoäthyl-N-allyl-anilin, N-$\beta$-Sulfoäthyl-N-benzyl-anilin, N-$\beta$-Sulfoäthyl-N-phenäthyl-anilin, N-$\beta$-Sulfoäthyl-N-$\beta$-carbonamidoäthyl-anilin, N-$\beta$-Sulfoäthyl-N-$\beta$-carboxyäthyl-anilin, N-$\beta$-Sulfoäthyl-N-$\beta$-cyanäthyl-aninlin, N-$\beta$-Sulfoäthyl-N-$\beta$-acetoxyäthyl-anilin, N-$\beta$-Sulfoäthyl-N-$\beta$-hydroxyäthyl-anilin, N-$\beta$-Sulfoäthyl-N-äthyl-2-methoxy-5-chloranilin, N-$\beta$-Sulfoäthyl-N-$\beta$-hyroxyäthyl-2-methoxy-5-chloranilin, N-$\beta$-Sulfoäthyl-N-$\beta$-hydroxyäthyl-3-chloranilin, N-$\beta$-Sulfoäthyl-N-$\beta$-carboxyäthyl-3-chloranilin, N,N-Bis-($\beta$-sulfoäthyl)-anilin, N,N-Bis-($\beta$-sulfoäthyl)-3-methyl-anilin, N,N-Bis-($\beta$-sulfoäthyl)-3-chloranilin, N-$\gamma$-Sulfopropyl-anilin, N-$\gamma$-Sulfopropyl-3-chloranilin, N-$\gamma$-Sulfopropyl-2-methyl-5-chloranilin, N-($\gamma$-Sulfo-$\beta$-hydroxypropyl)-2-methoxy-5-chloranilin,

N-($\gamma$-Sulfo-$\beta$-hydroxypropyl)-2-chloranilin, N-($\gamma$-Sulfo-$\beta$-hydroxypropyl)-2,5-dichloranilin, N-($\gamma$-Sulfo-$\beta$-hydroxypropyl)-N-äthylanilin, N-($\gamma$-Sulfo-$\beta$-sulfatopropyl)-N-äthyl-3-methylanilin, N-($\gamma$-Sulfo-$\beta$-sulfatopropyl)-N-$\beta$-sulfatoäthyl-anilin, N-($\gamma$-Sulfo-$\beta$-hydroxypropyl)-N-phenäthyl-anilin, N-($\gamma$-Sulfo-$\beta$-hydroxypropyl)-N-($\beta$-hydroxyäthyl)-2-methoxy-5-chloranilin, N-($\gamma$-Sulfo-$\beta$-hydroxypropyl)-anilin, N-($\gamma$-Sulfo-$\beta$-hydroxypropyl)-2-chlor-3-methyl-anilin, N-($\gamma$-Sulfopropyl)-N-äthyl-3-methylanilin, N-($\gamma$-Sulfo-$\beta$-hydroxypropyl)-N-$\beta$-carboxyäthyl-3-chloranilin, N-($\beta$-Sulfo-$\alpha$-mehtyl-äthyl)-anilin, N-($\beta$-Sulfo-$\alpha$-methyl-äthyl)-2-methoxy-5-chloranilin, N,N-Bis-($\gamma$-sulfo-$\beta$-hydroxypropyl)-3-chloranilin, N-($\gamma$-Sulfopropyl)-2,5-dichloranilin, N-$\beta$-Sulfatoäthyl-anilin, N-$\beta$-Sulfatoäthyl-N-äthyl-anilin, N-$\beta$-Sulfatoäthyl-N-methyl-anilin, N-$\beta$-Sulfatoäthyl-N-n-butyl-anilin, N-$\beta$-Sulfatoäthyl-N-äthyl-3-methyl-anilin, N-$\beta$-Sulfatoäthyl-N-äthyl-3-chlor-anilin, N-$\beta$-Sulfatoäthyl-N-$\beta$-hydroxyäthyl-3-chloranilin, N,N-Di-$\beta$-sulfatoäthyl-anilin, N,N-Di-$\beta$-sulfatoäthyl-3-chlor-anilin, N-$\beta$-Sulfatoäthyl-N-2-bromallyl-anilin, N-$\beta$-Sulfatoäthyl-N-2-chlorallyl-anilin, N-$\beta$-Sulfatoäthyl-N-benzyl-anilin, N-$\beta$-Sulfatoäthyl-N-$\beta$-carbonamidoäthyl-anilin, N-$\beta$-Sulfatoäthyl-N-$\beta$-carboxyäthyl-anilin, N-(4'-Sulfophenäthyl)-anilin, N-($\beta$-Cyanäthyl)-N-(4'-sulfophenäthyl)-anilin, N-$\beta$-Sulfatoäthyl-N-$\beta$-carbäthoxyäthyl-anilin, N-$\beta$-Sulfatoäthyl-N-$\beta$-Cyanäthyl-anilin, N-$\beta$-Sulfatoäthyl-N-$\beta$-acetoxyäthyl-anilin, N-$\beta$-Sulfatoäthyl-N-$\beta$-cyanäthyl-3-methyl-anilin, N-$\beta$-Sulfatoäthyl-N-$\beta$-hydroxyäthyl-anilin.

Die Diazotierung der Amine der allgemeinen Formeln (2) bzw. (4) kann nach allgemeinen bekannten Methoden, beispielsweise durch Einwirkung von Alkalinitrit und einer anorganischen Säure, wie Salzsäure, Schwefelsäure oder Phosphorsäure, oder durch Nitrosylschwefelsäure erfolgen.

Die Kupplungsreaktion mit den Kupplungskomponenten der allgemeinen Formeln (3) bzw. (5) kann ebenfalls in an und für sich bekannter Weise in neutralem bis saurem Milieu, bevorzugt in einem pH-Bereich zwischen 1 und 7 und bei einer Temperatur zwischen −5°C und +25°C, gegebenenfalls in Gegenwart von Natriumacetat oder ähnlichen, die Kupplungsgeschwindigkeit beeinflussenden Puffersubstanzen oder Katalysatoren, wie beispielsweise Dimethylformamid oder Pyridin, vorgenommen werden.

Die erfindungsgemäß hergestellten Verbindungen der Formel (1) können durch Aussalzen mittels Elektrolyten, beispielsweise Natriumchlorid oder Kaliumchlorid, vorteilhaft nach Einstellung des Reaktionsgemisches auf einen pH-Wert von 3,5 bis 7,0, aus der Reaktionslösung abgeschieden werden; nach Filtration werden sie getrocknet. Weiterhin lassen sich die erfindungsgemäßen Verbindungen aus ihren Syntheseansätzen durch Eindampfen oder Sprühtrocknen isolieren. In Fällen, in denen in der anfallenden Reaktionslösung größere Mengen an Sulfationen vorliegen, empfiehlt es sich, die Sulfationen vor der Sprühtrocknung als schwerlösliche Salze, beispielsweise als Calciumsulfat, auszufällen. Es ist auch möglich, die nach der Synthese erhaltenen Lösungen der Verbindung der Formel (1), gegebenenfalls nach Zusatz einer Puffersubstanz, direkt als Flüssigpräparation der färberischen Verwendung zuzuführen.

Die neuen Verbindungen der Formel (1) eignen sich als Farbstoffe, insbesondere als faserreaktive Farbstoffe; sie lassen sich bevorzugt auf den nachgenannten Substraten nach den für Reaktivfarbstoffe bekannten Anwendungsverfahren applizieren und echt fixieren.

Gegenstand der vorliegenden Erfindung ist somit auch die Verwendung der Verbindungen der Formel (1) als Farbstoffe, insbesondere zum Färben und Bedrucken von Cellulosefasern und natürlichen oder synthetischen Polyamidfasern oder von Leder bzw. ein Verfahren zum Färben und Bedrucken von Cellulosefasermaterialien oder natürlichen oder synthetischen Polyamidfasermaterialien oder von Leder unter Verwendung der Verbindung der Formel (1). Als Cellulosefasermaterialien sind Baumwolle und regenerierte Cellulose, wie Viskoseseide, sowie Leinen, Hanf und Jute bevorzugt. Geeignete Polyamidfasermaterialien sind insbesondere Wolle und andere Tierhaare sowie Seide, von den synthetischen Polyamiden insbesondere Polyamid-6,6, Polyamid-6, Polyamid-11 oder Polyamid-4.

Beispielsweise erhält man mit den erfindungsgemäßen Disazoverbindungen auf Cellulosefasern nach dem Ausziehverfahren unter Verwendung verschiedenster Alkalizusätze aus langer Flotte Färbungen mit sehr guter Farbausbeute. Mit ebenfalls ausgezeichneten Farbausbeuten färben sie Cellulosefasern nach den bekannten Klotzverfahren, wobei die Verbindung der Formel (1) mittels Alkali durch Verweilen bei Raumtemperatur, durch Dämpfen oder mit Trockenhitze fixiert werden kann. Bei den Druckverfahren können ebenfalls die üblichen einphasigen Verfahren in Anwesenheit eines säurebindenden Mittels oder alkalispendenden Mittels, wie beispielsweise Natriumbicarbonat, Natriumcarbonat oder Natriumtrichloracetat, in der Druckpaste mit anschließendem Fixieren durch Dämpfen, beispielsweise bei 100—103°C, oder die zweiphasigen Verfahren unter Verwendung neutraler oder schwach saurer Druckpasten, nach deren Druck das Fasermaterial entweder durch ein heißes elektrolythaltiges alkalisches Bad geführt oder aber mit einer alkalischen elektrolythaltigen Klotzflotte überklotzt und die Verbindung der Formel (1) danach durch Dämpfen oder Trockenhitze fixiert wird, verwendet werden. Man erhält mit diesen Verfahren farbstarke Drucke mit gutem Stand der Konturen und einem klaren Weißfond. Die Qualität der Drucke wird von wechselnden Fixierbedingungen praktisch nicht beeinflußt, und die Drucke zeigen somit eine befriedigende Nuancenkonstanz.

Die mit den Verbindungen der Formel (1) erhältlichen Färbungen oder Drucke auf Cellulosefasermaterialien besitzen beachtliche Echtheiten; hiervon sind insbesondere die wichtigsten Fabrikations- und Gebrauchsechtheiten hervorzuheben, wie die Lichtechtheit, die Waschechtheit, beispielsweise bei 60°C oder 95°C, die saure und alkalische Walkechtheit, die Wasserechtheit, die Seewasserechtheit, die saure Überfärbeechtheit, die alkalische und saure Schweißechtheit sowie die Plissier-, Bügel- und Reibechtheiten.

Sowohl die natürlichen als auch die synthetischen Polyamidfasermaterialien werden mit den neuen Verbindungen der Formel (1) bevorzugt aus saurem, wäßrigem Färbebad oder saurer, wäßriger Färbeflotte gefärbt. Vorzugsweise wird der gewünschte pH-Wert des Färbebades oder der Färbeflotte mit Essigsäure oder Essigsäure und Ammoniumacetat oder Natriumacetat eingestellt. Um eine gute Egalität der Färbungen zu erreichen oder deren Egalität zu verbessern, ist es vorteilhaft, übliche Egalisierhilfsmittel, beispielsweise Verbindungen auf Basis eines Umsetzungsproduktes von einem Fettamin, wie beispielsweise Stearylamin, mit einem Alkylenoxid, wie Äthylenoxid, und/oder eines Umsetzungsproduktes von Cyanurchlorid mit der etwa dreifach molaren Menge einer Aminobenzolsulfonsäure und/oder einer Aminonaphthalinsulfonsäure, im Färbebad oder der Färbeflotte mitzuverwenden. Die Färbungen können üblicherweise bei Temperaturen von 60—105°C, vorzugsweise im Ausziehverfahren, insbesondere bei Siedetemperatur des Färbebades, oder auch in einem Druckfärbeapparat bei Temperaturen bis zu 120°C ausgeführt werden.

Die nachfolgenden Beispiele dienen zur Erläuterung der Erfindung. Die dort angegebenen Teile sind Gewichtsteile, die Angaben in Prozent beziehen sich auf Gewichtsprozent, sofern nicht anders vermerkt. Volumenteile verhalten sich zu Gewichtsteilen wie Liter zu Kilogramm.

## Beispiel 1

36,1 Teile 4-$\beta$-Sulfatoäthylsulfonyl-anilin-2-sulfonsäure werden unter Rühren durch Zugabe von Natriumbicarbonat in 200 Teilen warmen Wasser gelöst; 20 Volumenteile einer wäßrigen 5n-Natriumnitritlösung werden hinzugegeben, und das Ganze wird auf 200 Teile Eis gegossen. Unter Rühren läßt man sodann 35 Teile einer 31%igen wäßrigen Salzsäure langsam zufließen; anschließend rührt man noch 30 Minuten bei etwa 5°C nach. Überschüssige salpetrige Säure wird mit etwas Amidosulfonsäure zerstört. Zu dieser Diazoniumsalzlösung gibt man eine saure Lösung von 10,7 Teilen 3-Methylanilin in 60 Teilen Wasser und führt die Kupplung anfangs in stark saurem Bereich, später durch allmähliche Zugabe von Natriumbicarbonat im pH-Bereich von 3 bis 3,5 durch. Nach beendigter Kupplung stellt man durch Zugabe von Natriumbicarbonat auf einen pH-Wert von 6,5 ein, fügt 20 Volumenteile einer wäßrigen 5n-Natriumnitritlösung zu und gießt das Gemisch langsam zu einer Mischung aus 300 Teilen Eis und 35 Teilen 31%iger Salzsäure. Nachdem dieses Diazotierungsgemisch 2 bis 3 Stunden bei etwa 5°C gerührt worden ist, wird die überschüssige salpetrige Säure mit wenig Amidosulfonsäure zerstört. — Dazu gibt man eine Lösung von 41,9 Teilen des Dinatriumsalzes von N,N-Bis-($\beta$-sulfatoäthyl)-3-chloranilin in 150 Teilen Wasser und führt die Kupplung zunächst in stark saurem Bereich, dann durch Zugabe von Natriumbicarbonat bei einem pH-Wert von etwa 4 bis 5 durch. Nach beendigter Kupplung wird ein pH-Wert von 5,5 bis 6 eingestellt und die hergestellte erfindungsgemäße Disazoverbindung entweder durch Aussalzen mit Natriumchlorid oder durch Sprühtrocknung isoliert.

Man erhält ein dunkelbraunes Pulver, das neben Elektrolyt das Natriumsalz der Verbindung der Formel

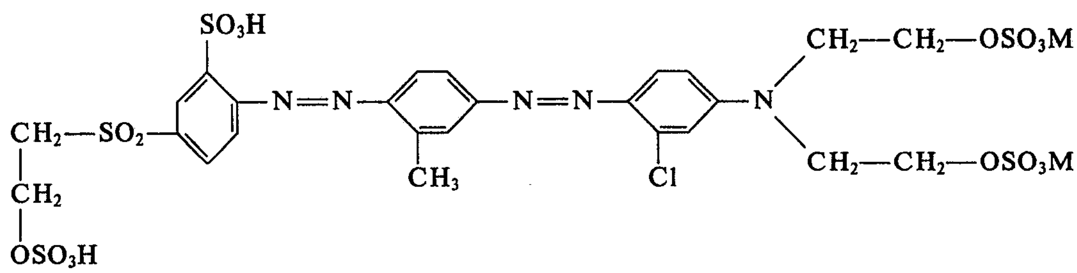

enthält. Sie besitzt sehr gute Farbstoffeigenschaften und liefert nach den für faserreaktive Farbstoffe üblichen und bekannten Applikations- und Fixiermethoden auf den in der Beschreibung genannten Fasermaterialien, wie beispielsweise auf Baumwolle und Wolle, sehr farbstarke gelbstichig braune Färbungen und Drucke mit sehr guter Beständigkeit gegen Waschbehandlungen.

## Beispiele 2 bis 13

Zur Herstellung einer erfindungsgemäßen Disazoverbindung verfährt man gemäß der Verfahrensweise des Beispieles 1, ersetzt jedoch hierbei das Dinatriumsalz von N,N-Bis-($\beta$-sulfoäthyl)-3-chloranilin, das als Kupplungskomponente dient, durch eine der in den nachfolgenden Tabellenbeispielen angegebenen Kupplungskomponenten entsprechend der allgemeinen Formel (3) in äquivalenter Menge. Man erhält in ebenfalls guter Ausbeute die hierzu angegebene erfindungsgemäße Disazoverbindung entsprechend der allgemeinen Formel (1). Diese faserreaktiven erfindungsgemäßen Disazoverbindungen zeigen ebenfalls sehr gute Farbstoffeigenschaften mit sehr guten anwendungstechnischen Eigenschaften; sie liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in dem in dem jeweiligen Tabellenbeispiel angegebenen Farbton. –

Das in den formelmäßig angegebenen Verbindungen befindliche Formelglied M hat die oben angegebene Bedeutung; vorzugsweise stellt es ein Alkalimetall, insbesondere Natrium, dar. Der für die erfindungsgemäße Verbindung angegebene Formelrest $D_1$ steht für den Rest der Formel

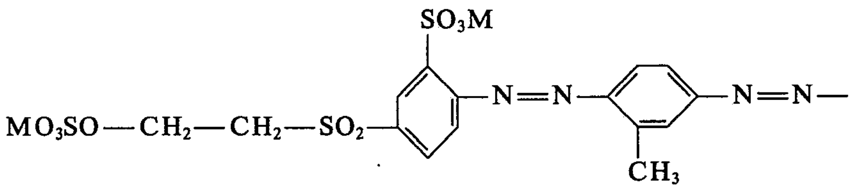

($D_1$)

mit M der oben angegebenen Bedeutung.

| Bsp. | Kupplungskomponente entspr. allg. Formel (3) | Disazoverbindung entspr. allg. Formel (1) | Farbton auf Baumwolle |
|---|---|---|---|
| 2 | 3-Chlor-N-(β-sulfoäthyl)-anilin | 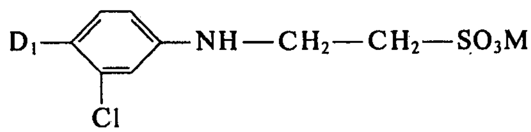 | gelbstichig braun |
| 3 | 3-Methyl-N-äthyl-N-(β-sulfoäthyl)-anilin | 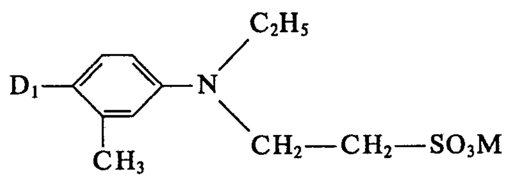 | violett |
| 4 | 3-Chlor-N,N-bis-(β-sulfoäthyl)-anilin | 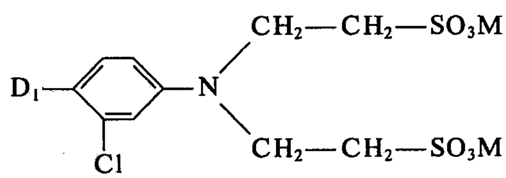 | gelbstichig braun |
| 5 | N,N-Bis-(β-sulfoäthyl)-anilin | 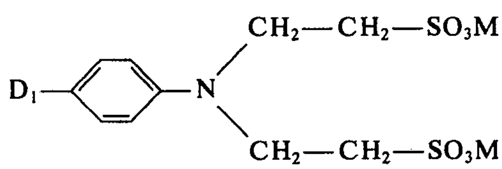 | braun |
| 6 | 3-Chlor-6-methoxy-N-äthyl-N-(β-sulfoäthyl)-anilin | 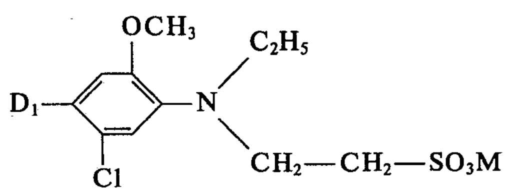 | blaustichig bordeaux |
| 7 | 3-Methyl-N-äthyl-N-(β-sulfato-γ-sulfo-n-propyl)-anilin | 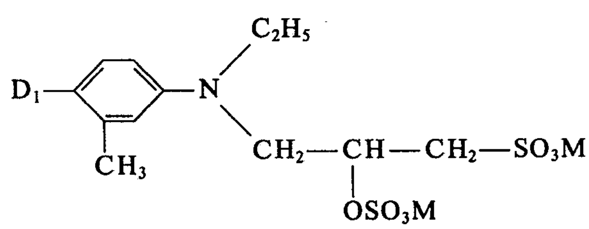 | blaustichig bordeaux |

Fortsetzung

| Bsp. | Kupplungskomponente entspr. allg. Formel (3) | Disazoverbindung entspr. allg. Formel (1) | Farbton auf Baumwolle |
|---|---|---|---|
| 8 | N-Äthyl-N-(3'-sulfo-benzyl)-anilin | 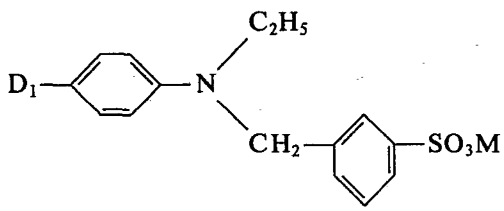 | blaustichig bordeaux |
| 9 | 3-Chlor-6-methyl-N-(β-sulfoäthyl)-anilin | 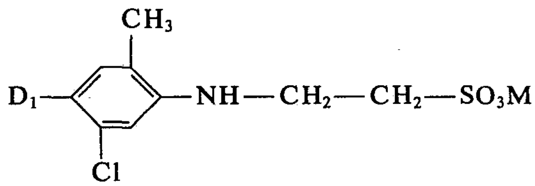 | braun |
| 10 | 3-Methyl-N,N-bis-(β-sulfatoäthyl)-anilin | 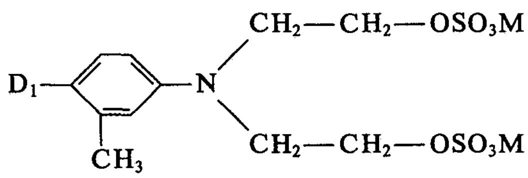 | violett |
| 11 | N-(β-Cyanoäthyl)-N-(β-sulfatoäthyl)-anilin | 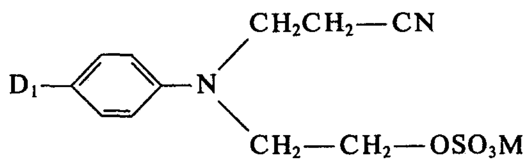 | rotstichig braun |
| 12 | N-(β-Sulfoäthyl)-anilin | 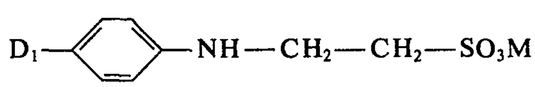 | gelbstichig braun |
| 13 | N-(β-Hydroxy-γ-sulfo-n-propyl)-anilin | 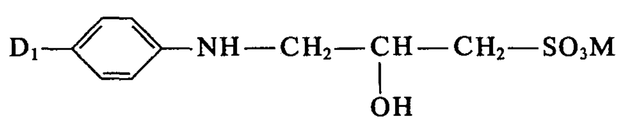 | gelbstichig braun |

## Beispiel 14

36,1 Teile 4-β-Sulfatoäthylsulfonyl-anilin-2-sulfonsäure werden nach den Angaben von Beispiel 1 diazotiert. Zu dieser Diazoniumsalzlösung fügt man eine neutralisierte Lösung von 22,3 Teilen 1-Naphthylamin-6-sulfonsäure in 150 Teilen Wasser hinzu und führt die Kupplung durch allmähliche Zugabe von Natriumbicarbonat bei einem pH-Wert von 4 zu Ende. Sodann stellt man auf einen pH-Wert von 6,5 ein, gibt 20 Volumenteile einer wäßrigen 5n-Natriumnitritlösung zu und gießt die Lösung langsam zu einem Gemisch aus 400 Teilen Eis und 35 Teilen 31%iger Salzsäure. Es wird etwa 2 Stunden bei ca. 5°C nachgerührt, anschließend die überschüssige salpetrige Säure mit wenig Amidosulfonsäure zerstört.

Dann fügt man eine gekühlte Lösung von 25,7 Teilen des Natriumsalzes von N-(β-Sulfoäthyl)-3-chloranilin in 180 Teilen Wasser zu und hält den pH-Wert durch Einstreuen von Natriumacetat zwischen 4 und 5. Die entstandene Disazoverbindung wird aus dem Kupplungsansatz entweder durch Aussalzen mit Natriumchlorid oder durch Sprühtrocknung isoliert. Man erhält ein dunkelbraunes Pulver, das neben Elektrolyt das Natriumsalz der Verbindung der Formel

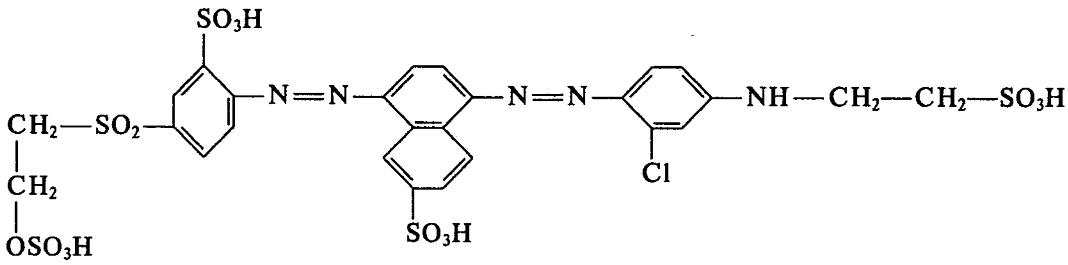

enthält. Diese Verbindung eignet sich sehr gut als Farbstoff und liefert nach den für faserreaktive Farbstoffe üblichen Applikations- und Fixiermethoden auf Baumwolle und Wolle sehr farbstarke braune Färbungen und Drucke, die gute Echtheitseigenschaften aufweisen.

### Beispiele 15 bis 30

Zur Herstellung einer erfindungsgemäßen Disazoverbindung verfährt man gemäß der Verfahrensweise des Beispiels 14, ersetzt jedoch hierbei das Natriumsalz von N-($\beta$-Sulfoäthyl)-3-chloranilin das als Kupplungskomponente dient, durch eine der in den nachfolgenden Tabellenbeispielen angegebenen Kupplungskomponenten entsprechend der allgemeinen Formel (3) in äquivalenter Menge. Man erhält in ebenfalls guter Ausbeute die hierzu angegebene erfindungsgemäße Disazoverbindung entsprechend der allgemeinen Formel (1). Diese faserreaktiven erfindungsgemäßen Disazoverbindungen zeigen ebenfalls sehr gute Farbstoffeigenschaften mit sehr guten anwendungstechnischen Eigenschaften; sie liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in dem in dem jeweiligen Tabellenbeispiel angegebenen Farbton. –

Das in den formelmäßig angegebenen Verbindungen befindliche Formelglied M hat die oben angegebene Bedeutung; vorzugsweise stellt es ein Alkalimetall, insbesondere Natrium, dar. Der für die erfindungsgemäße Verbindung angegebene Formelrest $D_2$ steht für den Rest der Formel

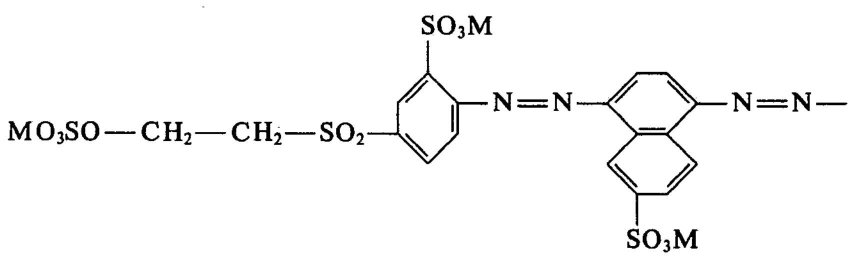 ($D_2$)

mit M der oben genannten Bedeutung.

| Bsp. | Kupplungskomponente entspr. allg. Formel (3) | Disazoverbindung entspr. allg. Formel (1) | Farbton auf Baumwolle |
|---|---|---|---|
| 15 | 3-Methyl-N-äthyl-N-($\beta$-sulfoäthyl)-anilin | 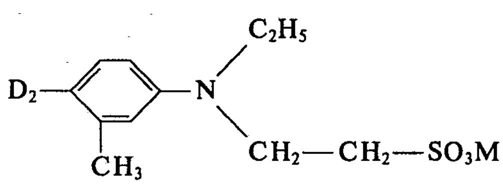 | blaustichig violett |
| 16 | 3-Chlor-N,N-bis-($\beta$-sulfatoäthyl)-anilin | 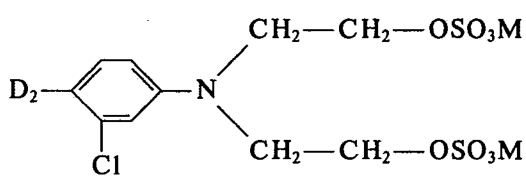 | gedecktes Violett |

Fortsetzung

| Bsp. | Kupplungskomponente entspr. allg. Formel (3) | Disazoverbindung entspr. allg. Formel (1) | Farbton auf Baumwolle |
|---|---|---|---|
| 17 | 3-Chlor-6-methyl-N-(β-sulfoäthyl)-anilin | 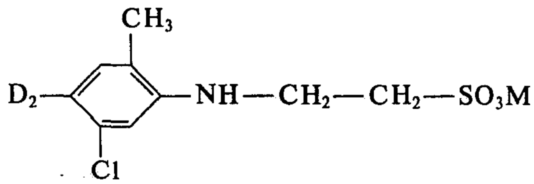 | gedecktes Bordeaux |
| 18 | N-(β-Cyanoäthyl)-N-(β-sulfatoäthyl)-anilin | 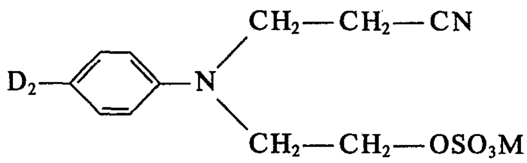 | bordeaux |
| 19 | 3-Methyl-N-äthyl-N-(β-sulfato-γ-sulfo-n-propyl)-anilin | 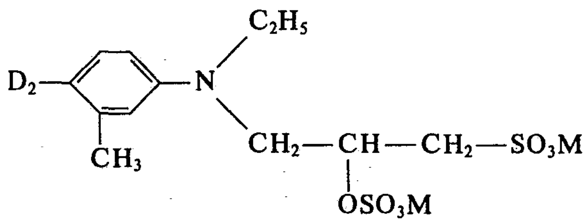 | blaustichig violett |
| 20 | N-(β-Sulfato-äthyl)-N-(β-sulfato-γ-sulfo-n-propyl)-anilin | 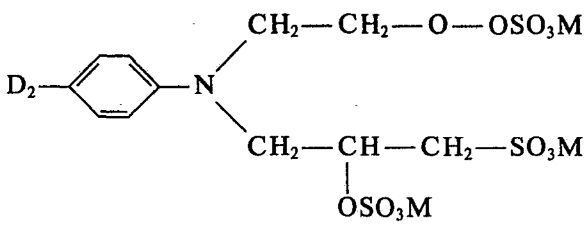 | violettstichig braun |
| 21 | 2,5-Dichlor-N-(β-sulfo-äthyl)-anilin | 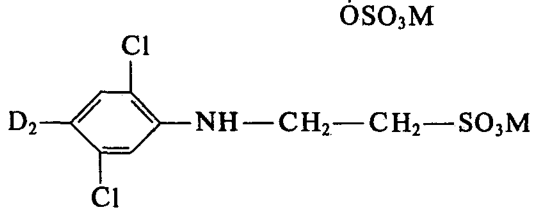 | braunstichig bordeaux |
| 22 | 3-Methyl-N,N-(β-sulfatoäthyl)-anilin | 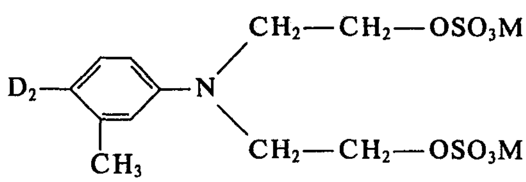 | blaustichig violett |
| 23 | N,N-Bis-(β-sulfoäthyl)-anilin | 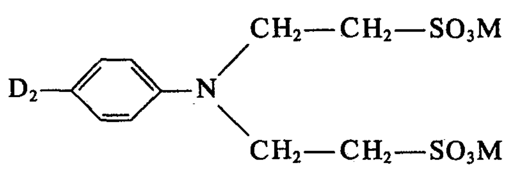 | bordeaux |
| 24 | N-(β-Sulfoäthyl)-anilin | 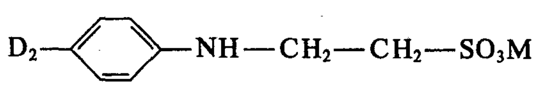 | rotstichig braun |
| 25 | N-(β-Hydroxyäthyl)-N-(β-sulfoäthyl)-anilin | 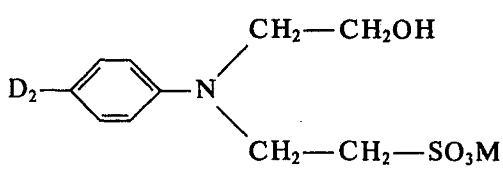 | bordeaux |

Fortsetzung

| Bsp. | Kupplungskomponente entspr. allg. Formel (3) | Disazoverbindung entspr. allg. Formel (1) | Farbton auf Baumwolle |
|---|---|---|---|
| 26 | 2-Chlor-N-(β-sulfo-äthyl)-anilin | 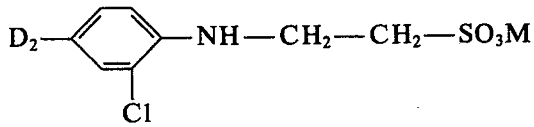 | rotstichig braun |
| 27 | N-Methyl-N-(β-hydroxy-γ-sulfo-n-propyl)-anilin | 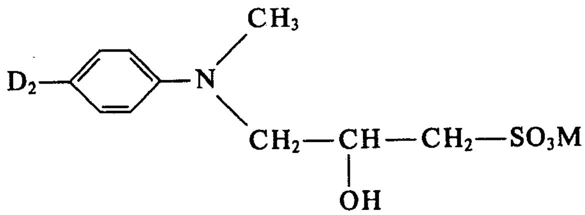 | bordeaux |
| 28 | 3-Chlor-N-(γ-sulfo-n-propyl)-anilin | 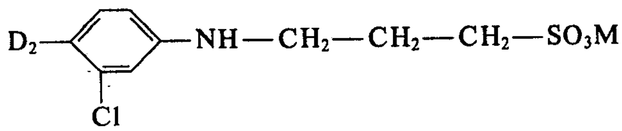 | braun |
| 29 | 2-Methoxy-N-(β-sulfo-äthyl)-anilin | 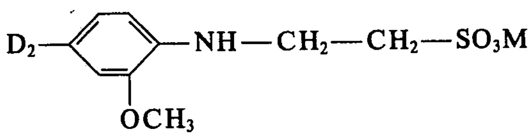 | violett |
| 30 | 2,3-Dichlor-N-(β-sulfo-äthyl)-anilin | 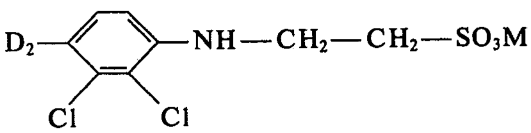 | rotstichig braun |

Beispiel 31

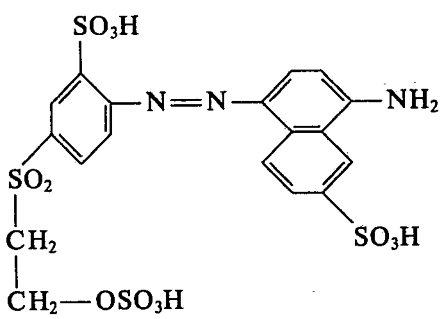

werden nach den Angaben des Beispieles 14 diazotiert und sodann mit einer gekühlten wäßrigen Lösung von 26,5 Teilen N-(β-Sulfoäthyl)-N-äthyl-3-methyl-anilin zur Disazoverbindung gekuppelt. Nach üblichem Aufarbeiten durch Sprühtrocknen oder Aussalzen erhält man das Alkalimetallsalz der Verbindung der Formel

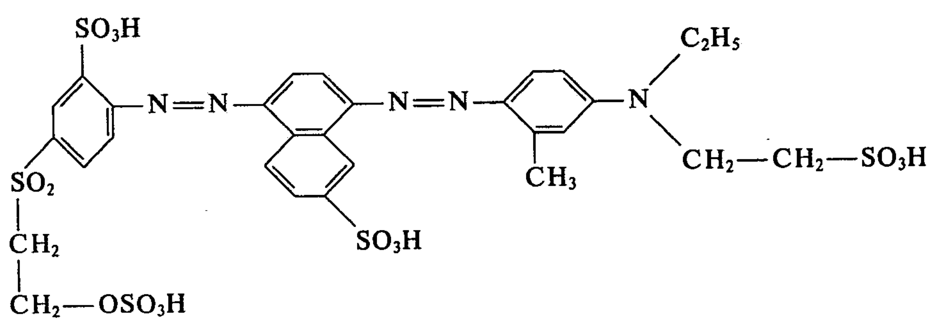

die sehr gute Farbstoffeigenschaften besitzt. Das Farbstoffsalz liefert nach den für faserreaktive Farbstoffe üblichen Anwendungsmethoden auf Baumwolle und Wolle sehr farbstarke blaustichig violette Färbungen und Drucke, die gute Echtheiten besitzen.

## Beispiel 32

49,3 Teile 4-(β-Sulfatoäthylsulfonyl)-3',6'-dimethyl-4'-aminoazobenzol-2-sulfonsäure werden in 300 Teilen Wasser mit Natriumbicarbonat auf einen pH-Wert von 6 gestellt, und die Lösung wird mit 20 Volumenteilen einer wäßrigen 5n-Natriumnitritlösung versetzt. Diese Mischung gibt man langsam in ein Gemisch aus 200 Teilen Eis und 35 Teilen einer 31 %igen wäßrigen Salzsäure; die einsetzende Diazotierungsreaktion wird bei einer Temperatur von 5—10°C während 3 Stunden unter Rühren vervollständigt. Überschüssige salpetrige Säure zerstört man mit wenig Amidosulfonsäure. Zur Kupplung gibt man anschließend eine gekühlte wäßrige Lösung von 25,1 Teilen des Natriumsalzes von N-Äthyl-N-(β-sulfoäthyl)-anilin zu und stellt den pH-Wert durch Einstreuen von Natriumbicarbonat auf 5,5 bis 6 ein. Nach beendigter Kupplung isoliert man das Natriumsalz der Verbindung der Formel

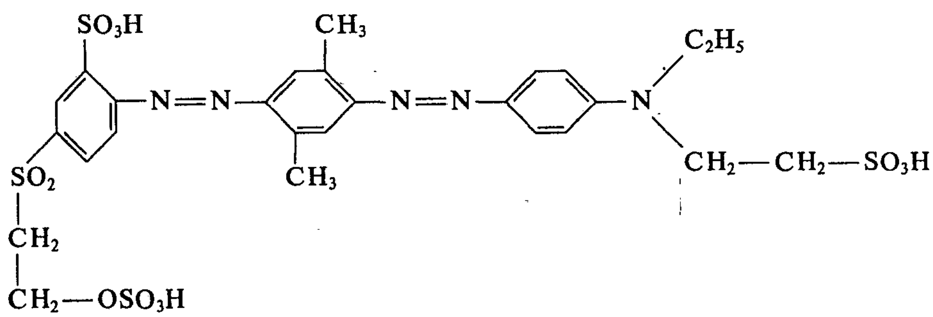

in üblicher Weise durch Sprühtrocknung. Sie besitzt sehr gute Farbstoffeigenschaften und liefert nach den für faserreaktive Farbstoffe üblichen Applikations- und Fixiermethoden auf Baumwolle und Wolle Färbungen und Drucke in den Nuancen des blaustichigen Bordeaux mit guten Echtheiten.

## Beispiele 33 bis 49

In den nachfolgenden Tabellenbeispielen sind weitere erfindungsgemäße Disazoverbindungen, in Form der freien Säure geschrieben, aufgezeichnet. Sie lassen sich in erfindungsgemäßer Weise aus ihren, aus den Formeln ersichtlichen Diazo- und Kupplungskomponenten herstellen, beispielsweise analog einem der oben angegebenen Ausführungsbeispiele. Sie werden aus den Reaktionsansätzen vorzugsweise in Form ihrer Natriumsalze isoliert. Sie stellen ebenfalls sehr gute Farbstoffe mit faserreaktiven Eigenschaften dar und besitzen sehr gute anwendungstechnische Eigenschaften; auf den in der Beschreibung genannten Fasermaterialien, insbesondere auf Cellulosefasermaterialien und Wolle, liefern sie nach den für faserreaktive Farbstoffe üblichen Applikations- und Fixiermethoden Färbungen und Drucke mit guten bis sehr guten Echtheiten in den angegebenen Farbtönen.

| Bsp. | Disazoverbindung der Formel (1) | Farbton auf Baumwolle |
|---|---|---|
| 33 | 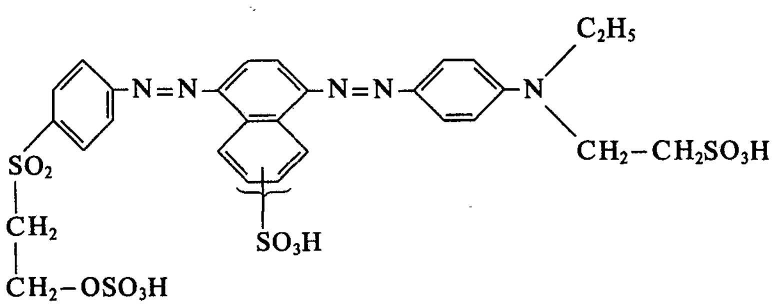 | violett |

Fortsetzung

| Bsp. | Disazoverbindung der Formel (1) | Farbton auf Baumwolle |
|---|---|---|
| 34 | 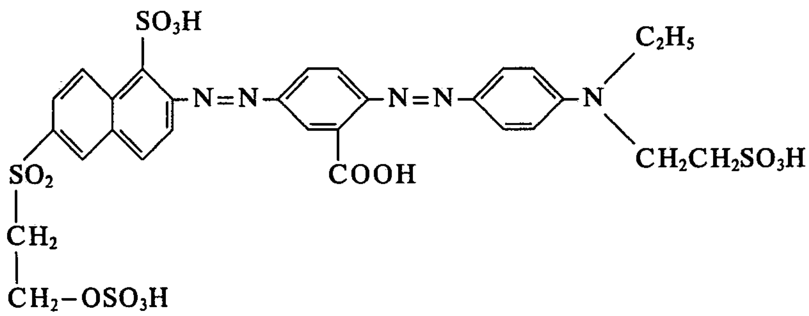 | violett |
| 35 | 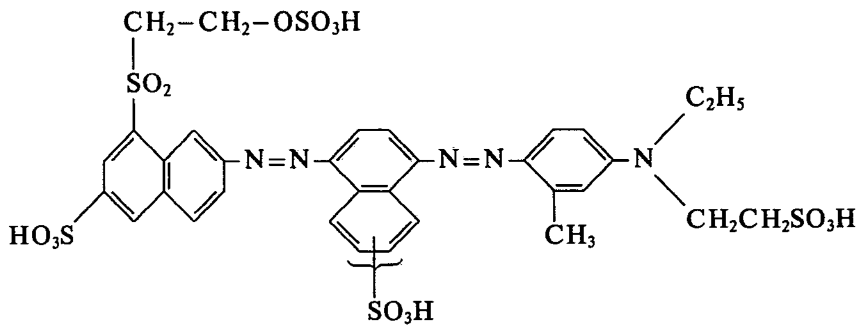 | rotst. blau |
| 36 | 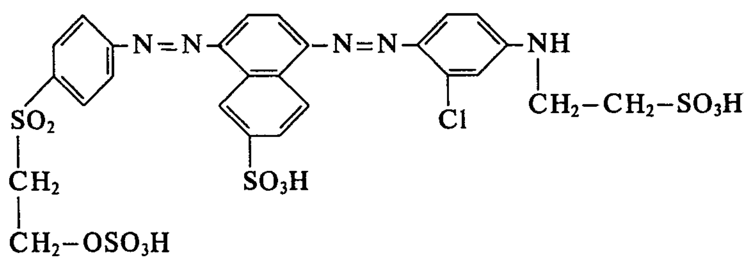 | violettst. braun |
| 37 | 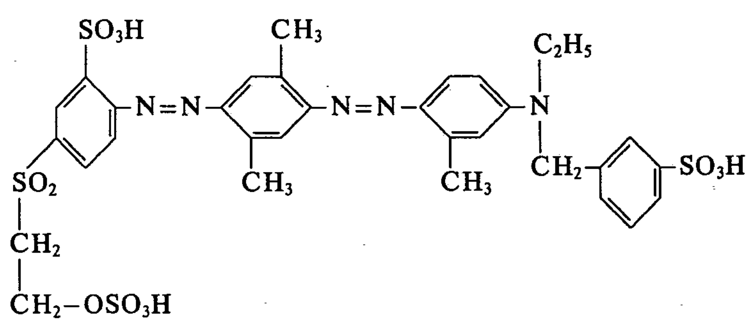 | rotstichig braun |
| 38 | 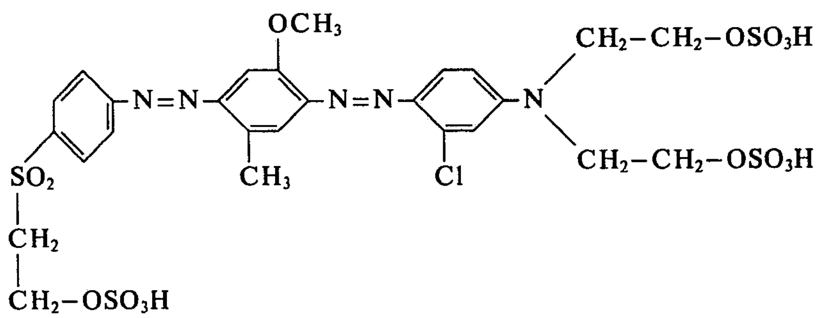 | braun |

Fortsetzung

| Bsp. | Disazoverbindung der Formel (1) | Farbton auf Baumwolle |
|---|---|---|
| 39 | 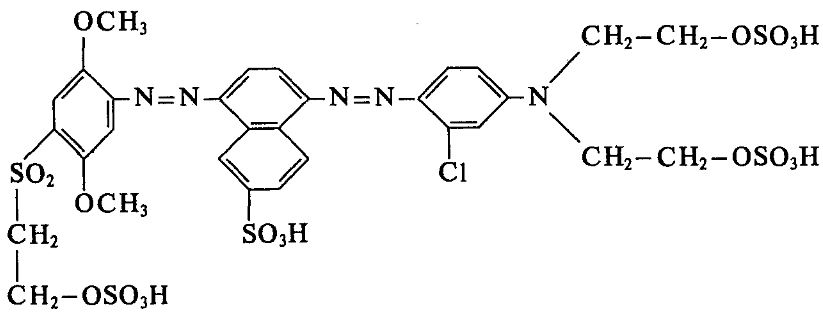 | blaust. violett |
| 40 | 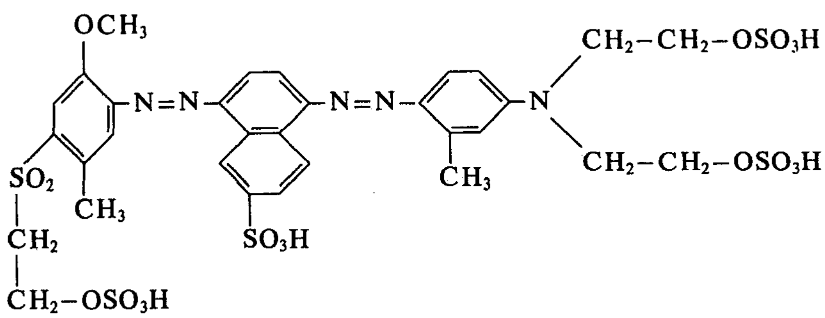 | violettst. braun |
| 41 | 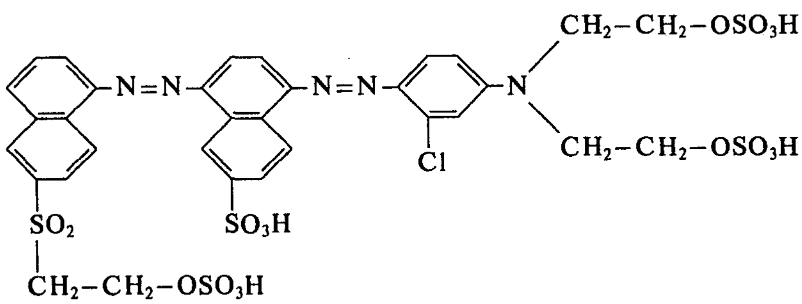 | braun |
| 42 | 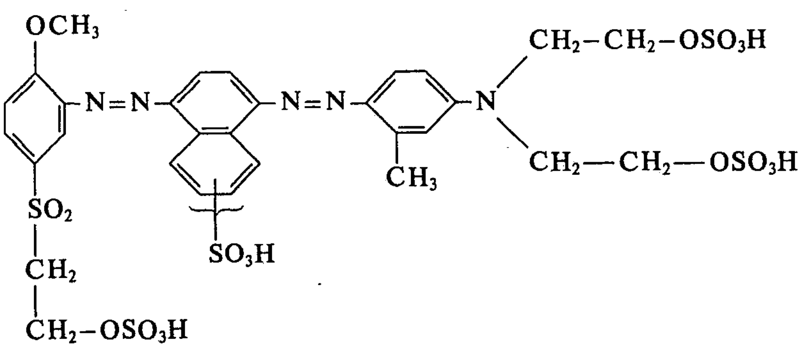 | blaustichig violett |
| 43 | 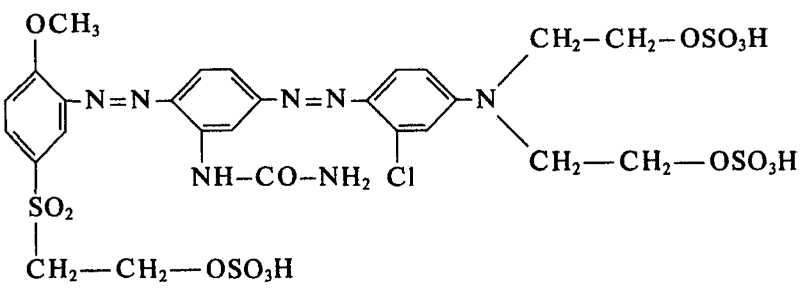 | gelbstichig rotbraun |

Fortsetzung

| Bsp. | Disazoverbindung der Formel (1) | Farbton auf Baumwolle |
|---|---|---|
| 44 | 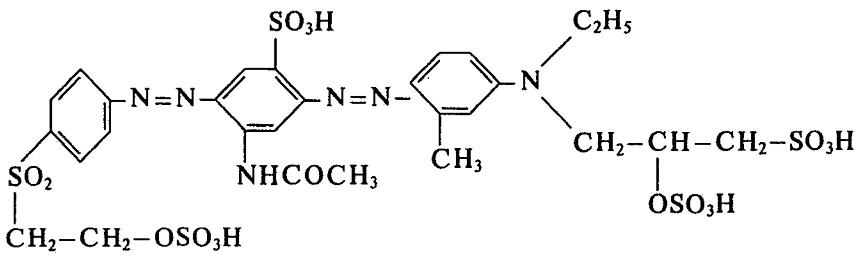 | blaust. bordeaux |
| 45 | 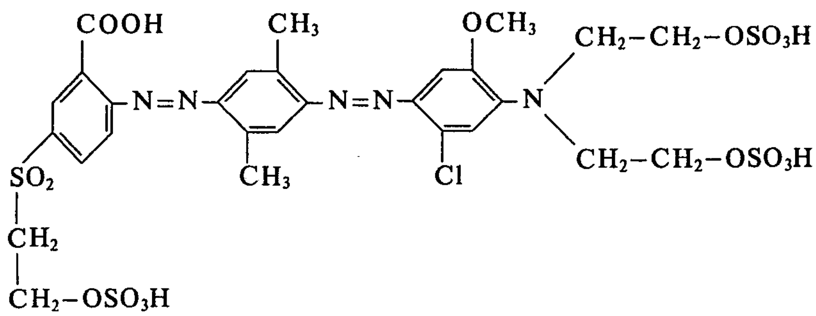 | violettst. braun |
| 46 | 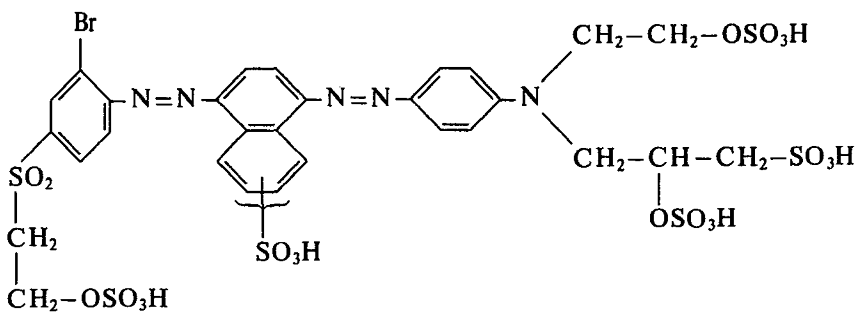 | braunst. violett |
| 47 | 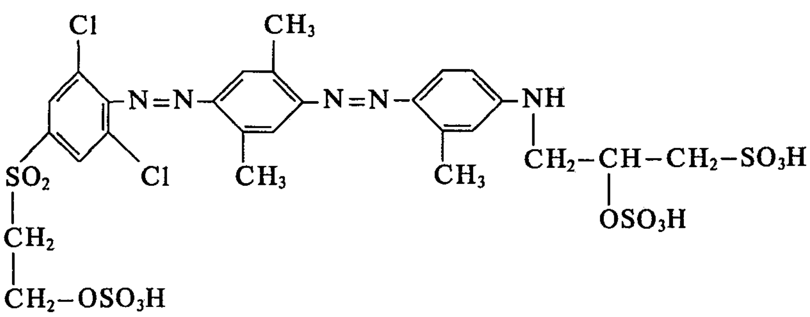 | braun |
| 48 | 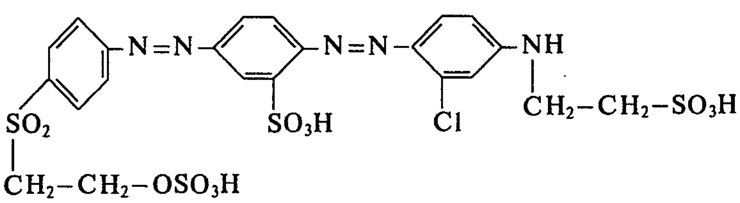 | blaustichig rot |
| 49 | 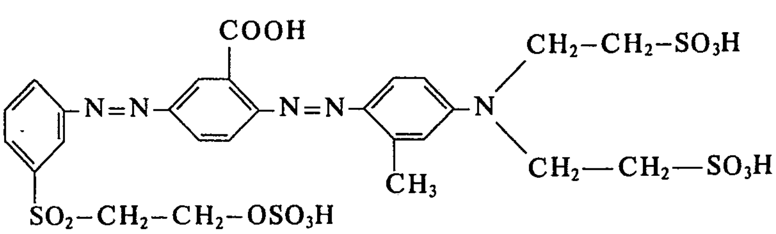 | blaustichig rot |

## Beispiele 50 bis 57

Zur Herstellung einer erfindungsgemäßen Disazoverbindung verfährt man gemäß der Verfahrensweise des Beispiels 31, ersetzt jedoch hierbei das als Kupplungskomponente dienende N-(β-Sulfoäthyl)-N-äthyl-3-methyl-anilin durch eine der in den nachfolgenden Tabellenbeispielen angegebenen Kupplungskomponenten entsprechend der allgemeinen Formel (3) in äquivalenter Menge. Man erhält in ebenfalls guter Ausbeute die hierzu angegebene erfindungsgemäße Disazoverbindung entsprechend der allgemeinen Formel (1). Diese faserreaktiven erfindungsgemäßen Disazoverbindungen zeigen ebenfalls sehr gute Farbstoffeigenschaften mit sehr guten anwendungstechnischen Eigenschaften; sie liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in dem in dem jeweiligen Tabellenbeispiel angegebenen Farbton. – Das in den formelmäßig angegebenen Verbindungen befindliche Formelglied M hat die oben angegebene Bedeutung; vorzugsweise stellt es ein Alkalimetall, insbesondere Natrium, dar. Der für die erfindungsgemäße Verbindung angegebene Formelrest $D_3$ steht für den Rest der Formel

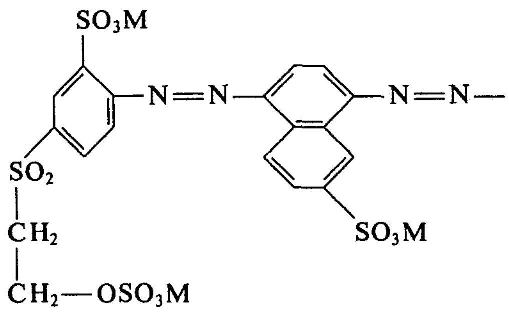

($D_3$)

mit M der oben angegebenen Bedeutung.

| Bsp. | Kupplungskomponente entspr. allg. Formel (3) | Disazoverbindung entspr. allg. Formel (1) | Farbton |
|---|---|---|---|
| 50 | N-(4'-Sulfophenäthyl)-anilin | 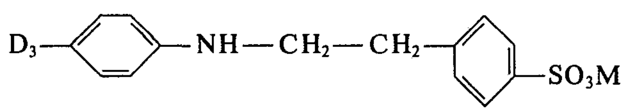 | rotstichig braun |
| 51 | N-(β-Cyanäthyl-N-(4'-sulfophenäthyl)-anilin | 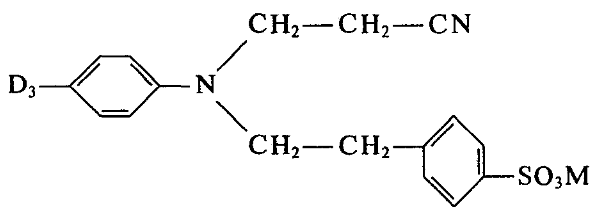 | rotstichig braun |
| 52 | N-(β-Cyanäthyl-N-(β-sulfatoäthyl)-anilin | 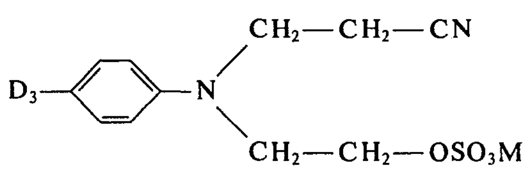 | rotstichig braun |
| 53 | 3-Chlor-N-,N-bis-(β-sulfatoäthyl)-anilin | 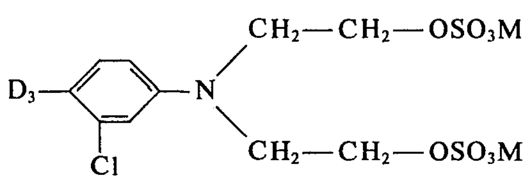 | violettst. braun |
| 54 | 2,5-Dichlor-N-(β-sulfoäthyl)-anilin | 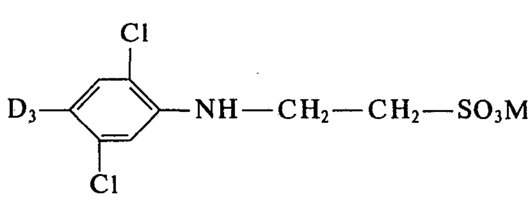 | braun |

Fortsetzung

| Bsp. | Kupplungskomponente entspr. allg. Formel (3) | Disazoverbindung entspr. allg. Formel (1) | Farbton |
|---|---|---|---|
| 55 | 3-Methyl-N-äthyl-N-(β-sulfato-γ-sulfo-n-propyl)-anilin | 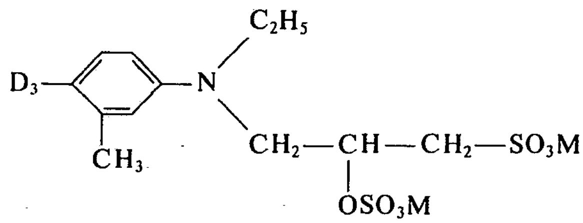 | blaustichig bordeaux |
| 56 | 3-Methyl-N-äthyl-(3′-sulfobenzyl)-anilin | 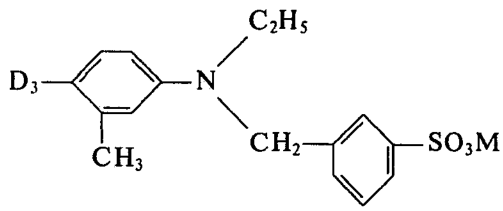 | blaustichig bordeaux |
| 57 | 3-Chlor-N-(β-carboxyäthyl)-N-(β-sulfoäthyl)-anilin | 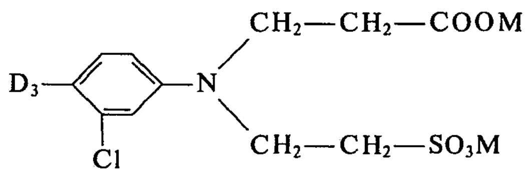 | rotstichig braun |

Beispiele 58 bis 71

In den nachfolgenden Tabellenbeispielen sind weitere erfindungsgemäße Disazoverbindungen, in Form der freien Säure geschrieben, aufgezeichnet. Sie lassen sich in erfindungsgemäßer Weise aus ihren aus den Formeln ersichtlichen Diazo- und Kupplungskomponenten herstellen, beispielsweise analog einem der oben angegebenen Ausführungsbeispiele. Sie werden aus den Reaktionsansätzen vorzugsweise in Form ihrer Natriumsalze isoliert. Sie stellen ebenfalls sehr gute Farbstoffe mit faserreaktiven Eigenschaften dar und besitzen sehr gute anwendungstechnische Eigenschaften; auf den in der Beschreibung genannten Fasermaterialien, insbesondere auf Cellulosefasermaterialien und Wolle, liefern sie nach den für faserreaktive Farbstoffe üblichen Applikations- und Fixiermethoden Färbungen und Drucke mit guten bis sehr guten Echtheiten in den angegebenen Farbtönen.

| Bsp. | Disazoverbindung der Formel (1) | Farbton auf Baumwolle |
|---|---|---|
| 58 | 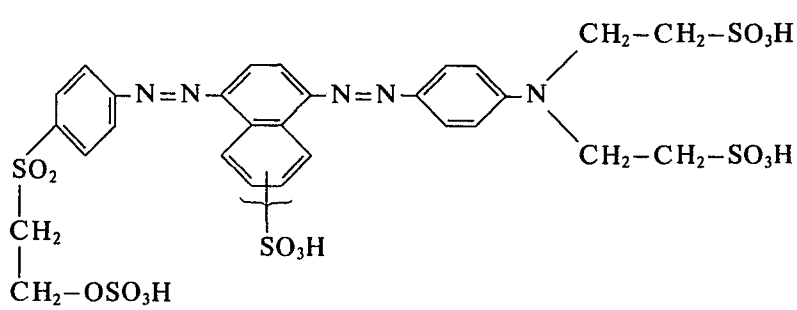 | braunstichig bordeaux |
| 59 | 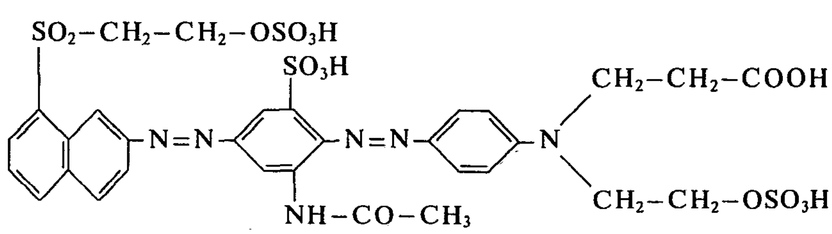 | blaustichig bordeaux |

Fortsetzung

| Bsp. | Disazoverbindung der Formel (1) | Farbton auf Baumwolle |
|---|---|---|
| 60 | 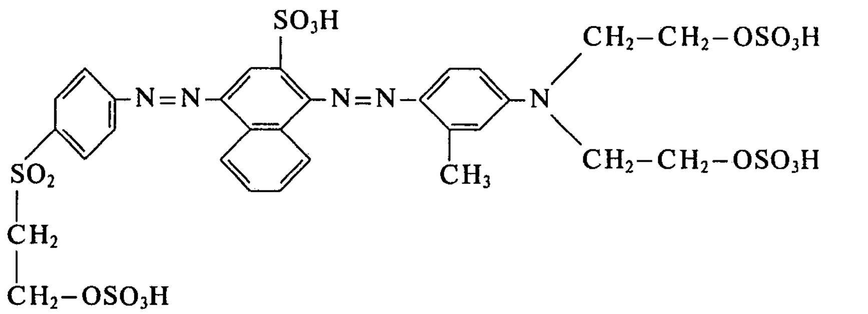 | braunstichig violett |
| 61 | 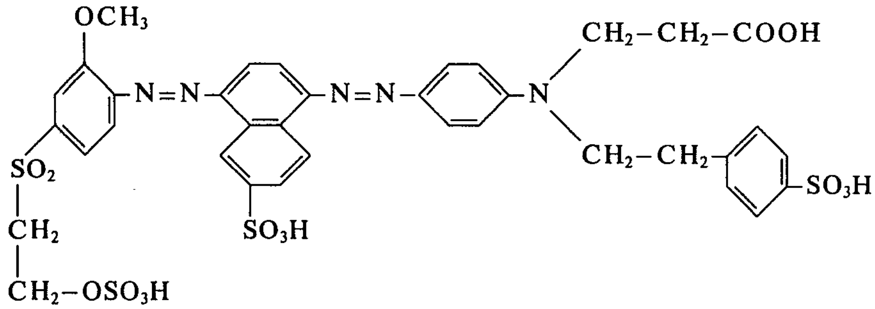 | violett |
| 62 | 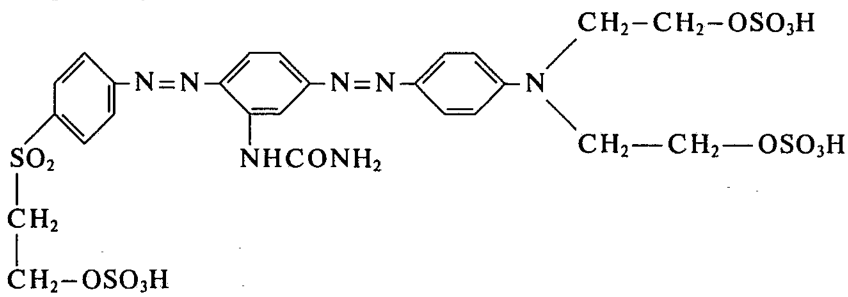 | rotbraun |
| 63 | 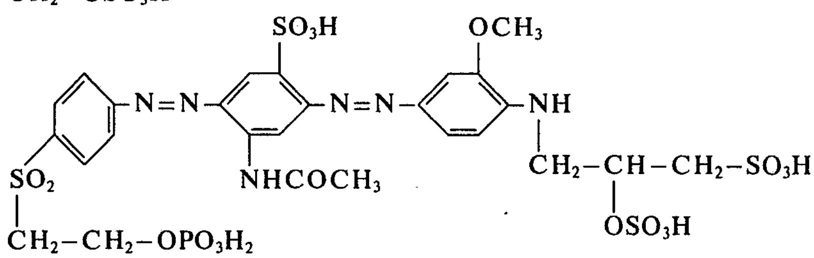 | braun-violett |
| 64 | 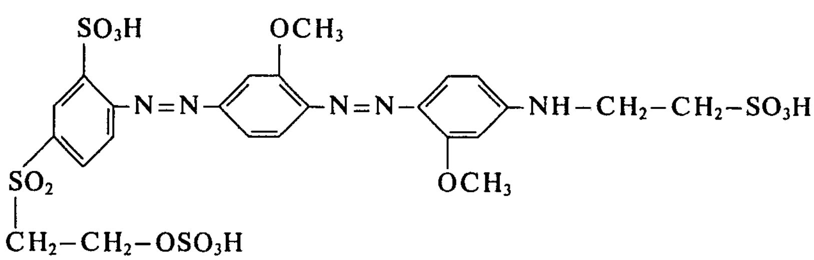 | dunkelbraun |
| 65 | 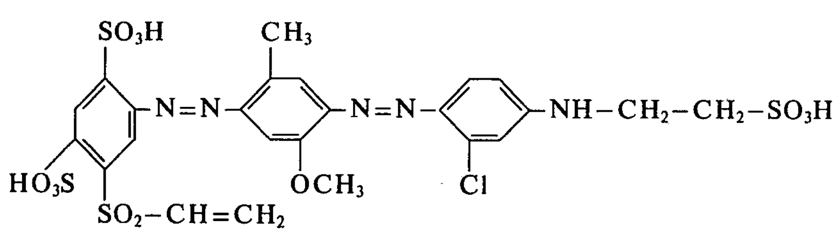 | blaustichig braun |

Fortsetzung

| Bsp. | Disazoverbindung der Formel (1) | Farbton auf Baumwolle |
|---|---|---|
| 66 | 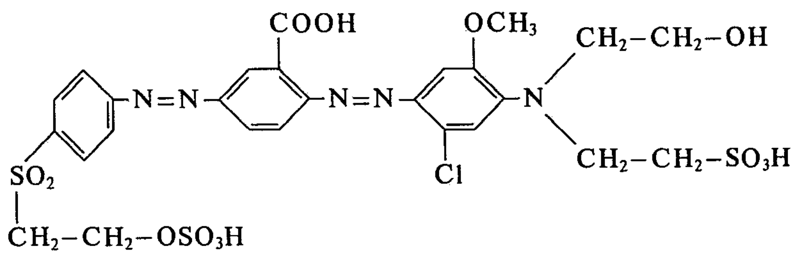 | violett |
| 67 | 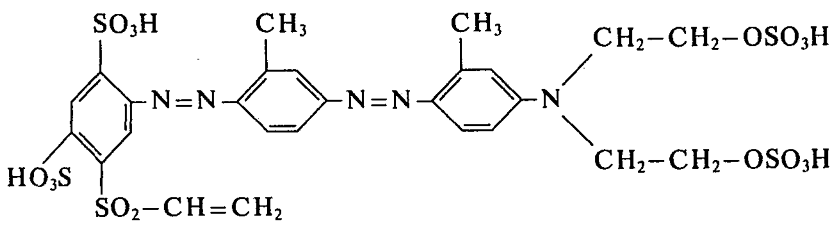 | blaustichig bordeaux |
| 68 | 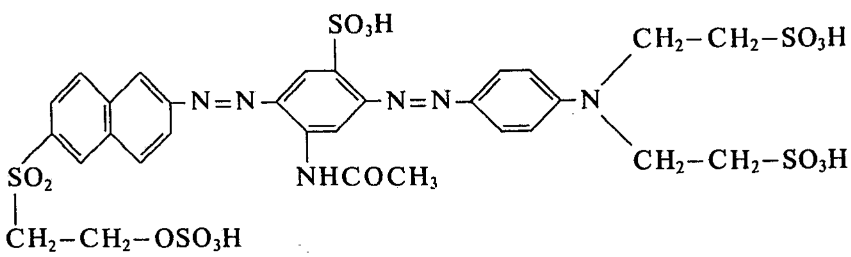 | blaustichig bordeaux |
| 69 | 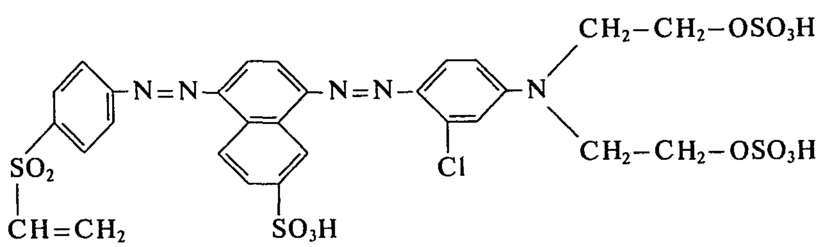 | violettstichig braun |
| 70 | 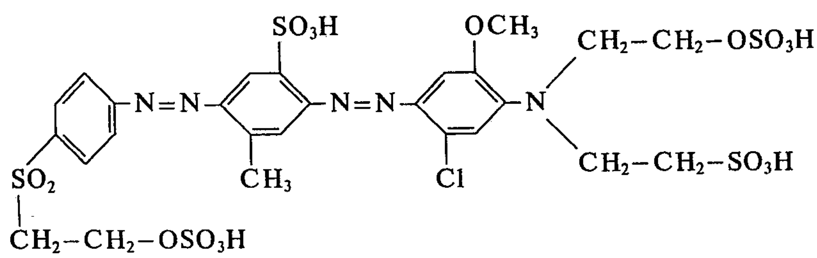 | violettstichig braun |
| 71 | 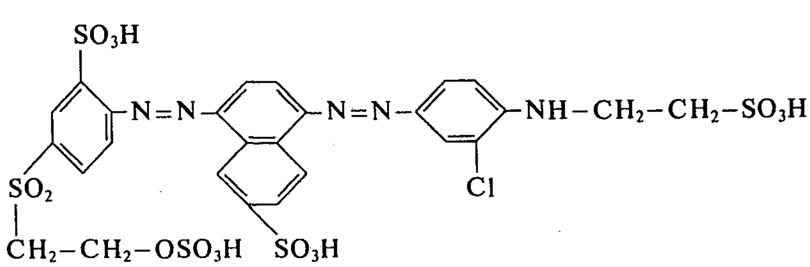 | braun |

Fortsetzung

| Bsp. | Disazoverbindung der Formel (1) | Farbton auf Baumwolle |
|---|---|---|
| 72 | 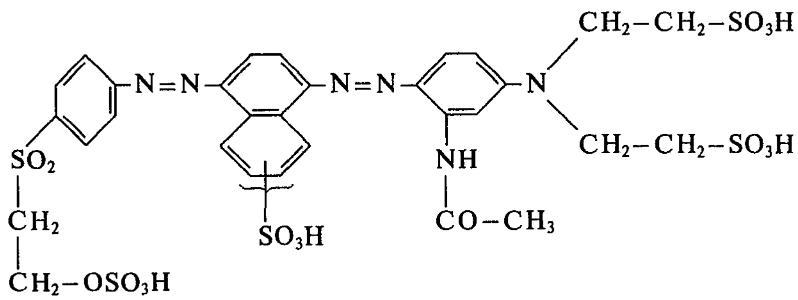 | braunstichig violett |

**Patentansprüche**

1. Wasserlösliche Disazoverbindungen der allgemeinen Formel 1

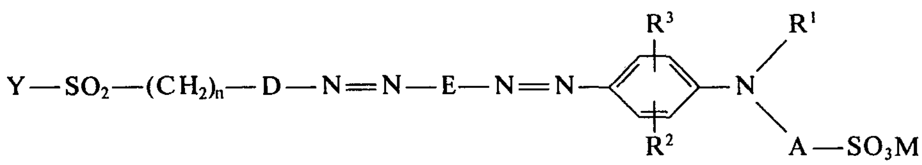

in welcher bedeuten:

Y ist die Vinylgruppe oder eine Gruppe der Formel $-CH_2-CH_2-Z$, in welcher Z einen organischen oder anorganischen, alkalisch eliminierbaren Rest oder die Hydroxygruppe bedeutet;
n steht für die Zahl Null, 1 oder 2;
D ist der Phenylenrest, der durch einen oder zwei Substituenten aus der Gruppe niederes Alkyl, niederes Alkoxy, Hydroxy, niederes Alkanoylamino, Benzoylamino, Chlor, Brom, Fluor und Carboxy und/oder durch eine Nitrogruppe und/oder durch eine Sulfogruppe substituiert sein kann, oder
D ist ein Naphthylenrest, der durch einen oder zwei Substituenten aus der Gruppe niederes Alkyl, niederes Alkoxy, Hydroxy, niederes Alkanoylamino, Benzoylamino, Chlor, Brom, Fluor, Carboxy und Sulfo und/oder durch eine Nitrogruppe substituiert sein kann, oder
D ist der Benzthiazol-2-yl-Rest, der im carbocyclischen Ring die angegebene Gruppe der Formel $Y-SO_2-(CH_2)_n-$ gebunden enthält und in diesem Benzolkern weiterhin durch einen Substituenten aus der Gruppe niederes Alkyl, niederes Alkoxy, Hydroxy, niederes Alkanoylamino, Benzoylamino, Nitro, Chlor, Brom und Sulfo substituiert sein kann;
E ist der 1,4-Phenylen- oder der 1,4-Naphthylenrest, die beide durch einen oder zwei Substituenten aus der Gruppe niederes Alkyl, niederes Alkoxy, Hydroxy, Ureido, niederes Alkanoylamino, Benzoylamino, Benzolsulfonylamino, durch niederes Alkyl, niederes Alkoxy, Chlor und/oder Sulfo substituiertes Benzoylamino, durch niederes Alkyl, niederes Alkoxy, Chlor und/oder Sulfo substituiertes Benzolsulfonylamino, Chlor, Brom, Carboxy und Sulfo substituiert sein können;
A ist der Äthylenrest der Formel $-CH_2-CH_2-$ oder der Äthylenoxyrest der Formel $-CH_2-CH_2-O-$ oder ein Propylenrest der Formel

$-CH_2-CH_2-CH_2-$ 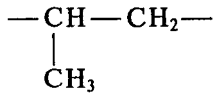 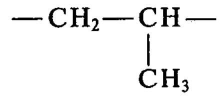

oder

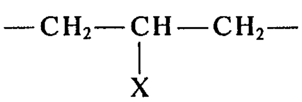

worin X für die Hydroxygruppe oder eine Acyloxygruppe einer niederen Alkancarbonsäure oder für ein Halogenatom oder für die Sulfatogruppe oder die Phosphatogruppe steht, oder ist ein Rest der Formel

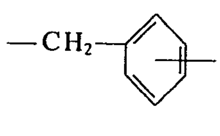

oder ein Rest der Formel

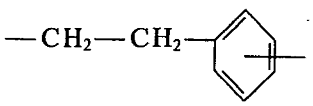

M ist ein Wasserstoffatom oder das Äquivalent eines Metalls;

$R^1$ ist ein Wasserstoffatom, eine niedere Alkylgruppe, eine niedere Alkenylgruppe oder eine niedere, durch Phenyl und/oder Hydroxy substituierte Alkylgruppe, wobei der Phenylrest durch Methyl, Methoxy und/oder Chlor substituiert sein kann, oder ist eine mit einer Säure veresterte Hydroxyalkylgruppe mit 2 bis 4 C-Atomen in diesem Alkylrest, eine Cyanalkylgruppe mit 2 bis 4 C-Atomen im Alkylrest, eine Carboxyalkylen-, Carbonamidoalkylen- oder Carbalkoxykylengruppe mit jeweils 1 bis 4 C-Atomen in dem Alkyl- bzw. Alkylenrest, eine Halogenalkylgruppe mit 2 oder 3 C-Atomen oder eine niedere Halogenalkenylgruppe oder ist eine Gruppe der obenstehend definierten Formel $-A-SO_3M$;

$R^2$ ist ein Wasserstoffatom, eine niedere Alkylgruppe, eine niedere Alkoxygruppe, die durch Hydroxy, Acetoxy, Carboxy, Carbonamid, Cyan oder Halogen substituiert sein kann, oder ein Halogenatom, eine Alkanoxylamino-, Benzoylamino- oder Ureidogruppe oder ist eine Trifluormethylgruppe;

$R^3$ ist ein Wasserstoffatom, eine niedere Alkylgruppe, eine niedere Alkoxygruppe, die durch Hydroxy, Acetoxy, Carboxy, Carbonamid, Cyan oder Halogen substituiert sein kann, oder ist ein Halogenatom.

2. Verbindungen nach Anspruch 1 der dort angegebenen und definierten allgemeinen Formel (1), dadurch gekennzeichnet, daß der Formelrest E den 1,4-Phenylenrest bedeutet, der durch eine oder zwei niedere Alkylgruppen, durch eine oder zwei niedere Alkoxygruppen, durch eine Carboxygruppe oder durch eine niedere Alkanoylaminogruppe oder durch eine Ureidogruppe oder durch eine niedere Alkanoylaminogruppe oder eine Sulfogruppe oder durch eine Ureidogruppe und eine Sulfogruppe substituiert sein kann, oder daß E den 1,4-Naphthylenrest bedeutet, der durch eine Sulfogruppe oder durch eine niedere Alkoxygruppe und eine Sulfogruppe substituiert ist.

3. Verbindungen nach Anspruch 1 oder 2 der dort angegebenen und definierten allgemeinen Formel (1), dadurch gekennzeichnet, daß D den 1,4-Phenylenrest oder den 1,4-Naphthylenrest bedeutet, die beide weiterhin durch einen oder zwei Substituenten aus der Gruppe Methyl, Methoxy, Hydroxy, Chlor, Brom, Carboxy und/oder Sulfo substituiert sein können.

4. Verfahren zur Herstellung der in Anspruch 1 genannten und definierten Disazoverbindungen der allgemeinen Formel (1), dadurch gekennzeichnet, daß man eine Verbindung der allgemeinen Formel (2)

$$Y-SO_2-(CH_2)_n-D-N=N-E-NH_2 \qquad (2)$$

in welcher D, E, Y und n die in Anspruch 1 genannten Bedeutungen haben, diazotiert und mit einer Kupplungskomponente der allgemeinen Formel (3)

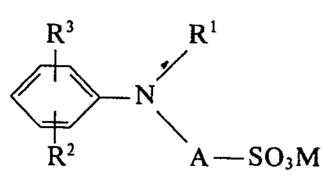

(3)

in der M, A, $R^1$, $R^2$ und $R^3$ die in Anspruch 1 genannten Bedeutungen haben, zur Disazoverbindung der allgemeinen Formel (1) kuppelt und gegebenenfalls im Falle daß Y für die $\beta$-Hydroxyäthyl-Gruppe steht, diese Disazoverbindung mit der $\beta$-Hydroxyäthyl-Gruppe mit Hilfe eines Sulfatierungsmittels in die entsprechende Disazoverbindung der allgemeinen Formel (1), in welcher Y für die $\beta$-Sulfatoäthylgruppe steht, oder mit einem Phosphatierungsmittel in die entsprechende Verbindung der allgemeinen Formel (1), in welcher Y für die $\beta$-Phosphatoäthyl-Gruppe steht, überführt.

5. Verwendung der in Anspruch 1 genannten und definierten Verbindungen oder der nach Anspruch 3 hergestellten Verbindungen der allgemeinen Formel (1) als Farbstoffe.

6. Verwendung nach Anspruch 5 zum Färben oder Bedrucken von hydroxygruppenhaltigen oder carbonamidgruppenhaltigen Fasern oder von Leder.

7. Verfahren zum Färben oder Bedrucken von hydroxy- oder carbonamidgruppenhaltigem Fasermaterial, bei welchem man einen Farbstoff auf dieses Material aufbringt und ihn darauf, gegebenenfalls in der Wärme und/oder in Gegenwart eines säurebindenden Mittels, fixiert, dadurch gekennzeichnet, daß man als Farbstoff eine Verbindung der in Anspruch 1 genannten und definierten allgemeinen Formel (1) einsetzt.

## Claims

1. Water-soluble disazo compounds of the general formula (1)

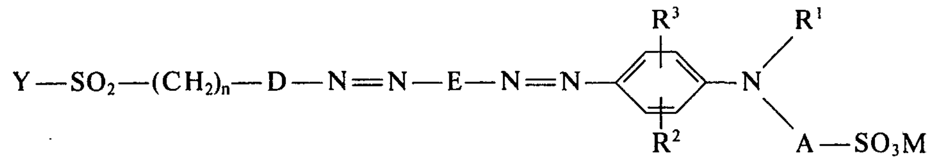 (1)

wherein:

Y is the vinyl group or a group of the formula $-CH_2-CH_2-Z$, in which Z denotes an organic or inorganic radical which can be eliminated by an alkali, or the hydroxy group;

n represents the number zero, 1 or 2;

D is the phenylene radical which can be substituted by one or two substituents from the group comprising lower alkyl, lower alkoxy, hydroxy, lower alkanoylamino, benzoylamino, chlorine, bromine, fluorine and carboxy and/or by a nitro group and/or by a sulfo group, or

D is a napthylene radical which can be substituted by one or two substituents from the group comprising lower alkyl, lower alkoxy, hydroxy, lower alkanoylamino, benzoylamino, chlorine, bromine, fluorine, carboxy and sulfo and/or by a nitro group, or is the benzothiazol-2-yl radical which contains the indicated group of the formula $Y-SO_2-(CH_2)_n-$ bonded in the carbocyclic ring and which can be further substituted in this benzene nucleus by a substituent from the group comprising lower alkyl, lower alkoxy, hydroxy, lower alkanoylamino, benzoylamino, nitro, chlorine, bromine and sulfo;

E is the 1,4-phenylene or 1,4-naphthylene radical, both of which can be substituted by one or two substituents from the group comprising lower alkyl, lower alkoxy, hydroxy, ureido, lower alkanoylamino, benzoylamino, benzenesulfonylamino, benzoylamino substituted by lower alkyl, lower alkoxy, chlorine and/or sulfo, benzenesulfonylamino substituted by lower alkyl, lower alkoxy, chlorine and/or sulfo, chlorine, bromine, carboxy and sulfo;

A ist the ethylene radical of the formula $-CH_2-CH_2-$ or the ethyleneoxy radical of the formula $-CH_2-CH_2-O-$ or a propylene radical of the formula

$-CH_2-CH_2-CH_2-$ 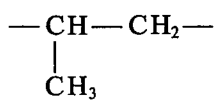 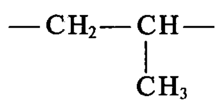

or

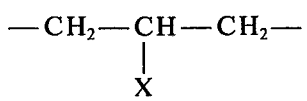

wherein X represents the hydroxy group or an acyloxy group of a lower alkanecarboxylic acid, or a halogen atom or the sulfato group or the phosphato group, or is a radical of the formula

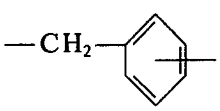 or 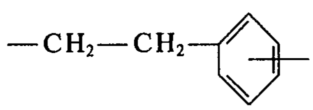

M is a hydrogen atom or the equivalent of a metal;

$R^1$ is a hydrogen atom, a lower alkyl group, a lower alkenyl group or a lower alkyl group which is substituted by phenyl and/or hydroxy, it being possible for the phenyl radical to be substituted by methyl, methoxy and/or chlorine, or is an acidesterified hydroxyalkyl group having 2 to 4 C atoms in this alkyl radical, a cyanoalkyl group having 2 to 4 C atoms in the alkyl radical, a carboxyalkylene, carbonamidoalkylene or carbalkoxyalkylene group having in each case 1 to 4 C atoms in the alkyl or alkylene radical, a halogenoalkyl group having 2 or 3 C-atoms, or a lower halogenoalkenyl group, or is a group of the formula $-A-SO_3M$ defined above;

$R^2$ is a hydrogen atom, a lower alkyl group, a lower alkoxy group which can be substituted by hydroxy, acetoxy, carboxy, carbonamide, cyano or halogen, or is a halogen atom, an alkanoylamino, benzoylamino or ureido group, or is a trifluoromethyl group;

$R^3$ is a hydrogen atom, a lower alkyl group, a lower alkoxy group which can be substituted by hydroxy, acetoxy, carboxy, carbonamide, cyano or halogen, or is a halogen atom.

2. Compounds according to claim 1, of the general formula (1) indicated and defined there, characterized by that the formula radical E denotes the 1,4-phenylene radical which can be substituted by one or two lower alkyl groups, by a carboxy group or by a lower alkanoylamino group or by a ureido group or by a lower alkanoylamino group or a sulfo group, or by a ureido group and a sulfo group, or that E denotes the 1,4-naphthylene radical which is substituted by a sulfo group or by a lower alkoxy group and a sulfo group.

3. Compounds according to claim 1 or 2, of the general formula (1) indicated and defined there, characterized by that D denotes the 1,4-phenylene radical or the 1,4-naphthylene radical, both of which can be further substituted by one or two substituents from the group comprising methyl, methoxy, hydroxy, chlorine, bromine, carboxy and/or sulfo.

4. A process for the preparation of the disazo compounds of the general formula (1), mentioned and defined in claim 1, characterized by that a compound of the general formula (2)

$$Y-SO_2-(CH_2)_n-D-N=N-E-NH_2 \qquad (2)$$

in which D, E, Y and n have the meanings mentioned in claim 1, is diazotized and coupled with a coupling component of the general formula (3)

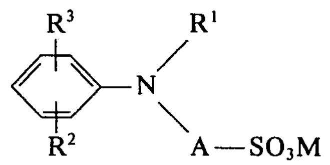

(3)

in which M, A, $R^1$, $R^2$ and $R^3$ have the meanings mentioned in claim 1, to give a disazo compound of the general formula (1), and, if Y represents the $\beta$-hydroxyethyl group, this disazo compound having the $\beta$-hydroxyethyl group is optionally converted with the aid of a sulfating agent into the corresponding disazo compound of the general formula (1), in which Y represents the $\beta$-sulfatoethyl group, or by means of a phosphating agent into the corresponding compound of the general formula (1), in which Y represents the $\beta$-phosphatoethyl group.

5. The use of the compounds mentioned and defined in claim 1, or of the compounds of the general formula (1) prepared in accordance with claim 3, as dyestuffs.

6. The use according to claim 5 for dyeing or printing fibers containing hydroxy groups or carbonamide groups, or leathers.

7. A process for dyeing or printing fiber material containing hydroxy or carbonamide groups, in which a dyestuff is applied to this material and fixed on it, if appropriate by means of heat and/or in the presence of an acid-binding agent, characterized by that a compound of the general formula (1), mentioned and defined in claim 1, is used as the dyestuff.

**Revendications**

1. Composés disazoïques solubles dans l'eau, de formule générale (1) ci-dessous

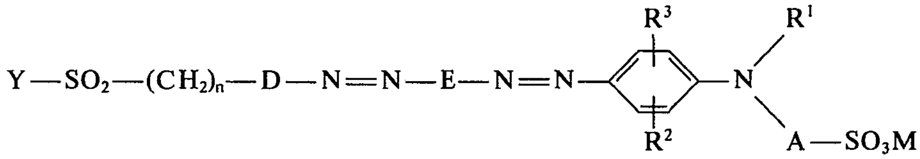

(1)

dans laquelle:

Y désigne le groupe vinyle ou un groupe $-CH_2-CH_2-Z$, Z étant un hydroxyle ou un radical organique ou minéral éliminable par voie alcaline;

n est le nombre 0, 1 ou 2;

D est un radical phénylène pouvant porter un ou deux substituants choisis parmi des alkyles et des alcoxy inférieurs, le radical hydroxyle, un alcanoylamino inférieur, un benzoylamino, le chlore, le brome et le fluor et le groupe carboxy, et/ou un groupe nitro et/ou un groupe sulfo, ou bien

D représente un radical naphtylène pouvant porter un ou deux substituants choisis parmi des alkyles et des alcoxy inférieurs, le radical hydroxyle, un alcanoylamino inférieur, un benzoylamino, le chlore, le brome et le fluor, les groupes carboxy et sulfo, et/ou un groupe nitro, ou encore représente un radical benzothiazol-2-yle dont le carbocycle comprend le groupe indiqué $Y-SO_2-(CH_2)_n-$ et dont le noyau benzénique peut porter en plus un substituant choisi parmi un alkyle et un alcoxy inférieur, un hydroxyle, un alcanoylamino inférieur, un benzoylamino, les groupes nitro et sulfo et le chlore et le brome;

E représente un radical 1,4-phénylène ou 1,4-naphtylène, tous deux pouvant porter un ou deux substituants choisis parmi des alkyles et des alcoxy inférieurs, les groupes hydroxyle et uréido, des alcanoylamino inférieurs, les groupes benzoylamino et benzènesulfonylamino, un benzoylamino substitué par un alkyle ou un alcoxy inférieur, du chlore et/ou un groupe sulfo, un benzène-sulfonylamino substitué par un alkyle ou un alcoxy inférieur, du chlore et/ou un groupe sulfo, ou encore parmi le chlore, le brome et les groupes carboxy et sulfo;

A est le radical éthylene $-CH_2-CH_2-$ ou éthylène-oxy $-CH_2-CH_2-O-$ ou un radical propylène

$-CH_2-CH_2-CH_2-$ 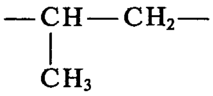 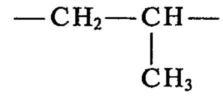

ou

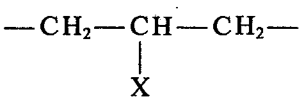

X désignant un hydroxyle ou un groupe acyloxy d'un acide alcane-carboxylique inférieur, ou bien un atome d'halogène, ou le groupe sulfato ou phosphato, ou encore un radical de formule

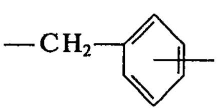 ou 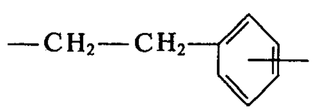

M désigne un atome d'hydrogène ou l'équivalent d'un métal;

$R^1$ est un atome d'hydrogène, un alkyle ou un alcényle inférieur ou un alkyle inférieur avec comme subsituant un phényle et/ou un hydroxyle, le phényle pouvant lui-même porter un groupe méthyle ou méthoxy et/ou un atome de chlore, ou bien un hydroxyalkyle en $C_2$ à $C_4$ estérifié par un acide ou encore un groupe cyanoalkyle en $C_2$ à $C_4$ dans l'alkyle, un groupe carboxyalkylène, carboxamidoalkylène ou alcoxycarbonylalkylène chacun en $C_1$ à $C_4$ dans l'alkyle ou dans l'alkylène, un halogénalkyle en en $C_2$ ou $C_3$ ou bien un halogénoalcényle inférieur ou encore un group $-A-SO_3-M$ tel que ci-dessus défini;

$R^2$ désigne un atome d'hydrogène, un alkyle inférieur ou un alcoxy inférieur, pouvant être substitué par un groupe hydroxyle, acétoxy, carboxy, carboxamide ou cyano ou par un halogène, ou bien un atome d'halogène, ou un alcanoylamino inférieur ou un groupe benzoylamino, uréido ou trifluorométhyle; et

$R^3$ représente un atome d'hydrogène, un alkyle inférieur ou un alcoxy inférieur, pouvant être substitué par un groupe hydroxyle, acétoxy, carboxy, carboxamide ou cyano ou par un halogène, ou bien un atome d'halogène.

2. Composés selon la revendication 1 caractérisés en ce que dans la formule (1), E est le radical 1,4-phénylène pouvant porter comme substituants un ou deux alkyles inférieurs, un ou deux alcoxy inférieurs, un groupe carboxy ou alcanoylamino inférieur ou un groupe uréido ou un alcanoylamino inférieur ou un groupe sulfo ou un groupe uréido et un groupe sulfo, ou bien en ce que E est le radical 1,4-naphtylène pouvant porter comme substituants un groupe sulfo ou un alcoxy inférieur et un groupe sulfo.

3. Composés selon la revendication 1 ou 2 caractérisés en ce que dans la formule (1), D est le radical 1,4-phénylène ou 1,4-naphtylène pouvant porter chacunen plus un ou deux substituants choisis parmi les groupes méthyle, méthoxy et hydroxy, le chlore et le brome et les groupes carboxy et/ou sulfo.

4. Procédé de préparation des composés disazoïques de formule (1) selon la revendication 1, caractérisé en ce que l'on diazote un composé de formula générale (2)

$$Y-SO_2-(CH_2)_n-D-N=N-E-NH_2 \qquad (2)$$

dans laquelle D, E, Y et n ont les significations indiquées dans la revendication 1 puis on copule le diazoique formé avec une composante de copulation de formule générale (3)

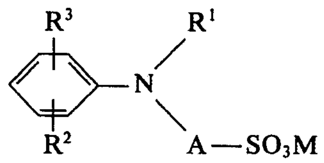

(3)

dans laquelle M, A, $R^1$, $R^2$ et $R^3$ ont les significations indiquées dans la revendication 1 pour obtenir le composé disazoique de formule générale (1), et le cas échéant, si Y est un groupe $\beta$-hydroxyéthyle, on transforme ce composé disazoique, avec le groupe $\beta$-hydroxyéthyle avec un agent de sulfatation, en composé selon la formule (1) dans lequel Y sera un groupe $\beta$-sulfatoéthyle, ou bien on le transforme avec un agent de phosphatation en composé de formule (1) dans lequel Y sera un groupe $\beta$-phosphatoéthyle.

5. L'utilisation comme colorants des composés définis à la revendication 1 ou qui ont été préparés suivant la revendication 4.

6. Utilisation selon la revendication 5 pour la teinture ou l'impression de fibres à groupes hydroxyliques ou carboxamides, ou du cuir.

7. Procédé de teinture ou d'impression de matières fibreuses à groupes hydroxyliques ou carboxamides dans lequel on applique sur la matière un colorant que l'on fixe en suite, éventuellement à chaud et/ou en présence d'un agent liant les acides, procédé caractérisé en ce qu'on utilise comme colorant un composé de formule (1) définie à la revendication 1.